# EUROPEAN PATENT APPLICATION

(11) **EP 1 732 077 A1**
(43) Date of publication of application: **13.12.2006**
(21) Application number: 05721485.0
(22) Date of filing: 25.03.2005
(51) Int. Cl.: G11B 17/26

(54) **RECORDING MEDIUM REPRODUCER**

(30) Priority: 31.03.2004 JP 2004107710
(71) Applicant: Pioneer Corporation, Tokyo 153-8654 (JP); Tohoku Pioneer Corporation, Tendo-shi, Yamagata 994-8585 (JP)
(72) Inventor: MIZOGUCHI, T., Pioneer Corporation, Kawagoe-shi, Saitama 350-8555 (JP); SUZUKI, Toru, Pioneer Corporation, Kawagoe-shi, Saitama 350-8555 (JP); MUTO, Akihiro, Pioneer Corporation, Kawagoe-shi, Saitama3 50-8555 (JP); SHIMOSAWA, Ryosuke, Pioneer Corporation, Kawagoe-shi, Saitama 350-8555 (JP); TAKAHASHI, Hideaki, Pioneer Corporation, Kawagoe-shi, Saitama 350-8555 (JP); SAITOU, Kazuhiro, Tohoku Pioneer Corporation, Tendo-shi, Yamagata 994-8585 (JP)
(74) Representative: Grünecker, Kinkeldey, Stockmair & Schwanhäusser Anwaltssozietät
(86) International application number: PCT/JP2005/005558
(87) International publication number: WO 2005/098849

(57) **Abstract**

A CD changer includes a plurality of holders 19, a disk playback part, and a stopper part 100.A holder 19 holds a CD. The stopper part 100 includes a first stopper 103, a second stopper 104, a swing stopper 105, an up-down stopper 106, and an auxiliary stopper 107. When the disk playback part plays back the selected CD, the first stopper 103 supports the other CDs at the arrow K1 side, and the second stopper 104 and the auxiliary stopper 107 support the other CDs at the arrow K2 side. The swing stopper 105 supports the selected CD. When the selected CD is clamped, the swing stopper 105 is saved from the selected CD.

## Description

### [technical field]

This invention relates to a playback apparatus for recording media mounted on such as a vehicle, in particular, the playback apparatus which receives a plurality of recording media in a body thereof and plays back one of the recording media.

### [background]

There is used a playback apparatus for recording media receiving a plurality of recording media such as a compact disc (hereunder referred to as "CD") and playing back one of the recording media (for example, Patent Document 1). Such a playback apparatus is mounted on such as a vehicle, and includes a main body, a plurality of components, a separating mechanism, and a playback mechanism.

The main body is made in a flat box shape. The main body receives a stack of the components stacked. The separating mechanism moves the components in a direction of stacking them. The separating mechanism moves the components and separates a component holding a recording medium to playback from the other components.

The playback mechanism includes a swing chassis disposed rotatably about one end thereof in the main body, and a pickup driving member mounted on the swing chassis. The pickup driving member includes a movable frame disposed movably on the swing chassis, a turntable disposed on the movable frame, and an optical pickup. The turntable clamps and rotates the recording medium. The optical pickup reads data from a predetermined recording surface of the recording media.

In the playback apparatus, the separating mechanism separates the holding member holding the recording media from the other holding members. Then, by rotating the swing chassis around the end thereof, the pickup driving member is inserted into between the recording medium and the other recording media. The optical pickup reads out the data from the recording medium and the playback apparatus plays back the data. When the separating mechanism moves the holding members, the swing chassis, namely, the pickup driving member comes out from between of the recording medium and the other recording media.
[Patent Document 1] Japanese Published Patent Application No. 2002-304800

### [disclosure of the invention]

### [problem to be solved by the invention]

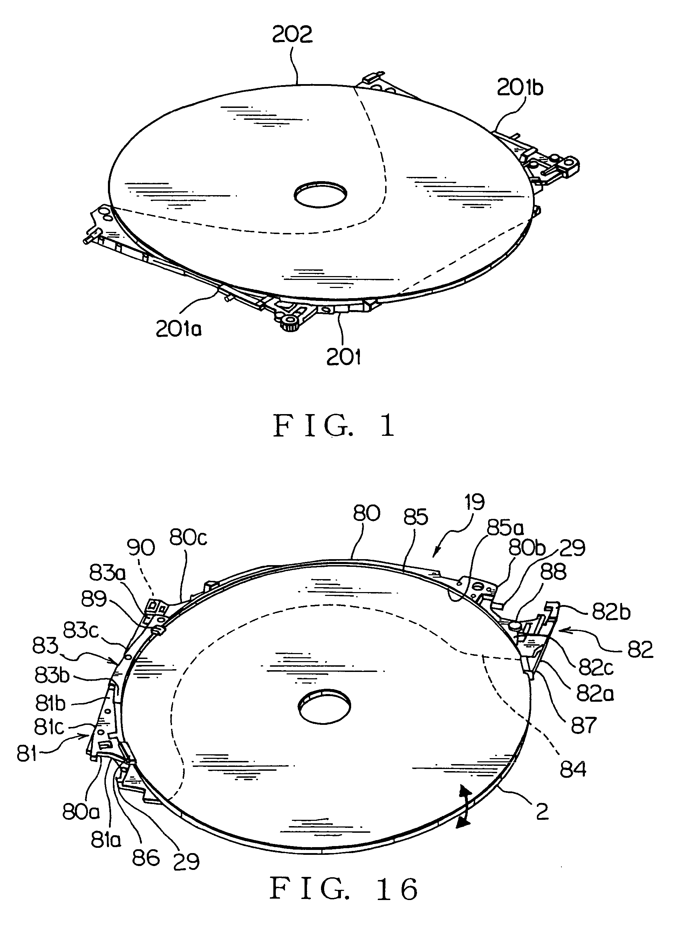

There is used, for example, a holder 201 shown in Fig. 1 as the holding member of the playback apparatus. As shown in Fig. 1, the holder 201 is made in a flat board shape, and a not-shown locking member for locking on an outer edge of a recording medium 202 is mounted on both ends 201a, 201b.

However, the playback apparatus is required to be downsized. Therefore, an applicant of the present invention suggests that the holder is downsized in a C-shape to allow the playback apparatus to be downsized. When the holder is made in a C-shape and downsized, an interval between a slot of the main body and the holder increases, and the recording medium may fall out from between the holder and the slot, and be trapped in the main body. Further, when the holder is made in a C-shape and downsized, holding power of the holder to the recording media is less than enough. Therefore, when moving up and down the holder in the main body in order to separate the holder from the other holder for playing back the recording medium held by the holder, the recording medium may fall out of the holder because of lack of the holding power of the holder to the recording medium.

An object of the present invention is to provide a playback apparatus for recording medium to prevent a recording medium from falling out of the holding member when the holding member for the recording medium is downsized and the playback apparatus is downsized.

### [means for solving problem]

For attaining the object, according to the present invention as claimed in claim 1, there is provided

A playback apparatus for recording medium including:
a receiving chamber in which a plurality of holding members for holding recording media are overlapped;
a playback device for moving in a direction of the overlapped recording media and clamping a recording medium held by the holding member for playback;
a transporting device for transporting the playback device to a position where the playback device faces a recording surface of the recording medium received in the receiving chamber;
a separating device for separating a holding member for one recording medium from the other holding members for holding the other recording media in a direction of overlapping the holding members;
a first stopper being attached to a first wall in the direction of overlapping the holding members and interposed between a slot and the holding members, said first stopper holding first media at the first wall side from the one recording medium when the playback device playing back the one recording medium;
a second stopper being attached to a second wall in the direction of overlapping the holding members and interposed between the slot and the holding members, said second stopper holding second media at the second wall side from the one recording medium when the playback device playing back the one recording medium;
a swing stopper being movable along with the playback device in the direction of overlapping the holding members, and interposed between the slot and the holding members for holding the one medium until the playback device clamping the one medium to playback, said swing stopper being saved from the one medium when the playback device clamps the one medium; and
an up-down stopper being movable along with the playback device in the direction of overlapping the holding members, and interposed between the slot and the holding members for supporting the recording media held by the holding members.

### [best mode for carrying out the invention]

Hereunder, a playback apparatus for recording medium according to an embodiment of the present invention will be explained. In the playback apparatus, a first stopper supports first media to which the first stopper is closer than one medium to be played back, a second stopper supports second media to which the second stopper is closer than the one medium to be played back, and a swing stopper supports the one medium to be played back.

Thus, the one medium is prevented from falling out of the holder when the one recording medium is played back.

Further, a hoist stopper moves with a playback device and supports the recording medium. Thereby, even when the holding members and the recording media are moved in a direction of stacking, any one of the first, second, or hoist stoppers supports the recording media. Therefore, when the recording media are inserted, removed, or moved along the stacking recording media, the recording media are prevented from falling out of the supporting members.

Further, providing a plurality of stoppers for supporting the recording media allows the playback device to move without interfering with the stoppers. Further, according to the present invention, in addition to the second stopper, a sub stopper may be disposed for supporting the second recording media to which the second stopper is closer than the one recording medium to be played back.

### [brief description of drawing]

[Fig. 1] A perspective view showing a holder as a conventional holding member.
[Fig. 2] A perspective view showing an appearance of a CD changer as a playback apparatus according to an embodiment of the present invention.
[Fig. 3] A perspective view showing a fixed chassis, a disk loader, a playback part, a disk receiver, and a separating mechanism mounted on the CD changer in Fig. 2.
[Fig. 4] A partially exploded perspective view showing the fixed chassis, the playback part 5, and the disk receiver.
[Fig. 5] A perspective view showing the disk receiver and the driving chassis assembled with each other.
[Fig. 6] A perspective view showing the holders of the disk receiver in Fig. 3 and a spaced groove expansion mechanism.
[Fig. 7] An enlarged perspective view showing the spaced groove expansion mechanism in Fig. 6.
[Fig. 8] A perspective view showing a moving member of the spaced groove expansion mechanism being the farthest away from a second wall, and a projection of the holder facing a guiding groove.
[Fig. 9] A perspective view showing the projection positioned on a playback part of the guiding groove by rotating a cam member of the spaced groove expansion mechanism.
[Fig. 10] A perspective view showing the cam member of the spaced groove expansion mechanism being the closest to a second wall, and the projection of the selected holder facing a guiding groove.
[Fig. 11] A perspective view showing the projection positioned on a loading part of the guiding groove by rotating the cam member of the spaced groove expansion mechanism.
[Fig. 12] An enlarged perspective view showing the spaced groove expansion mechanism in Fig. 7.
[Fig. 13] A perspective view showing the cam member of the spaced groove expansion mechanism and the moving member positioned at the uppermost position.
[Fig. 14] A perspective view showing the moving member of the spaced groove expansion mechanism positioned at the uppermost position, and the cam member 24 positioned at the center position.
[Fig. 15] An exploded perspective view showing the spaced groove expansion mechanism in Fig. 12.
[Fig. 16] A perspective view showing the holder of the CD changer in Fig. 2.
[Fig. 17] A perspective view showing an arrangement of such as stoppers of the CD changer.
[Fig. 18A] an explanatory view showing a playback part positioned at the farthest away from a top wall
[Fig. 18B] an explanatory view showing the playback part positioned at the closest to the top wall.
[Fig. 19] An exploded view in a circumferential direction showing the cam member, the rotating member, and the moving member of the spaced groove expansion mechanism.
[Fig. 20] An exploded schematic view showing the guiding groove of the cam member facing the projection of the selected holder.
[Fig. 21] An exploded schematic view showing the cam member rotated from a state in Fig. 20, and the projection beginning to be inserted into the guiding groove.
[Fig. 22] An exploded view showing the cam member rotated from a state in Fig. 21, and the projection positioned in the loading part of the guiding groove.
[Fig. 23] An exploded view showing the cam member rotated from a state in Fig. 22, and the projection positioned in the pickup insertion part of the guiding groove.
[Fig. 24] An exploded view showing the cam member rotated from a state in Fig. 23, and the projection positioned in the clamp part of the guiding groove.
[Fig. 25] An exploded view showing the cam member rotated from a state in Fig. 24, and the projection positioned in the playback part of the guiding groove.
[Fig. 26] An exploded view showing the projection of the second holder from the bottom as shown in Fig. 25 positioned in the playback part of the guiding groove.
[Fig. 27] An exploded view showing the projection of the second holder from the top as shown in Fig. 25 positioned in the playback part of the guiding groove.
[Fig. 28] An exploded schematic view showing the cam member 24 in Fig. 19 positioned at the closest position to the second wall.
[Fig. 29] An exploded schematic view showing the projection of the selected holder facing the guiding groove of the cam member in Fig. 28.
[Fig. 30] An exploded view showing the cam member rotated from a state in Fig. 29, and the projection beginning to be inserted into the guiding groove.
[Fig. 31] An exploded view showing the cam member rotated from a state in Fig. 30, and the projection positioned in the loading part of the guiding groove.
[Fig. 32] An exploded view showing the projection of the second holder from the top as shown in Fig. 31 positioned in the playback part of the guiding groove.
[Fig. 33] An exploded view showing the projection of the second holder from the bottom as shown in Fig. 31 positioned in the playback part of the guiding groove.
[Fig. 34] A plan view showing a cooperative moving mechanism in Fig. 19.
[Fig. 35] A plan view showing the cooperative moving mechanism in Fig. 20.
[Fig. 36] A plan view showing a cooperative moving mechanism in Fig. 26.
[Fig. 37] A plan view showing a cooperative moving mechanism in Fig. 27.
[Fig. 38] A plan view showing a cooperative moving mechanism in Fig. 28.
[Fig. 39] A plan view showing a cooperative moving mechanism in Fig. 29.
[Fig. 40] A plan view showing a cooperative moving mechanism in Fig. 32.
[Fig. 41] A plan view showing a cooperative moving mechanism in Fig. 33.
[Fig. 42] A plan view showing the holder and a swing stopper of the CD changer in Fig. 2.
[Fig. 43] A plan view showing the swing stopper in Fig. 42 supporting a CD.
[Fig. 44] A plan view showing the swing stopper in Fig. 43 being saved from the CD.
[Fig. 45] An explanatory view showing the first stopper supporting the CDs at the arrow K1 side in a state shown in Fig. 22.
[Fig. 46A] An explanatory view showing the swing stopper in Fig. 43 supporting the selected CD.
[Fig. 46B] the swing stopper in Fig. 44 being saved from the selected CD.
[Fig. 47] An explanatory view showing the second stopper and the auxiliary stopper supporting the CDs at the arrow K2 side in the state shown in Fig. 22.
[Fig. 48] An explanatory view showing the first stopper supporting all the other CDs when the lowest CD is to be played back.
[Fig. 49] An explanatory view showing the second stopper and the auxiliary stopper supporting all the other CDs when the uppermost CD is to be played back.
[Fig. 50A] An explanatory view showing the first stopper supporting the other CDs at the arrow K1 side in a state shown in Fig. 30.
[Fig. 50B] An explanatory view showing the up-down stopper supporting the other CDs at the arrow K2 side in a state shown in Fig. 30.
[Fig. 51] An explanatory view showing the up-down stopper and the second stopper supporting all the other CDs when the uppermost CD is to be loaded or unloaded.
[Fig. 52] An explanatory view showing the up-down stopper and the first stopper supporting all the other CDs when the lowest CD is to be loaded or unloaded.

### [embodiment]

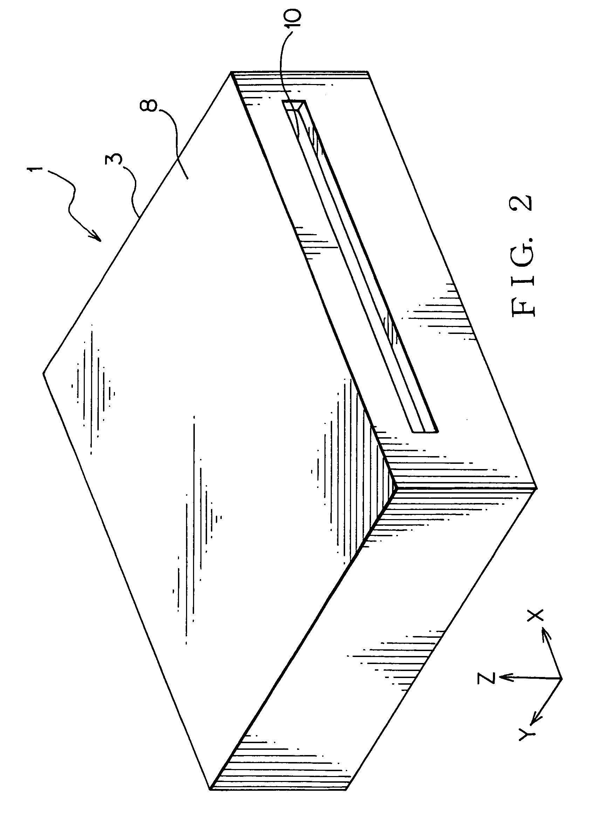

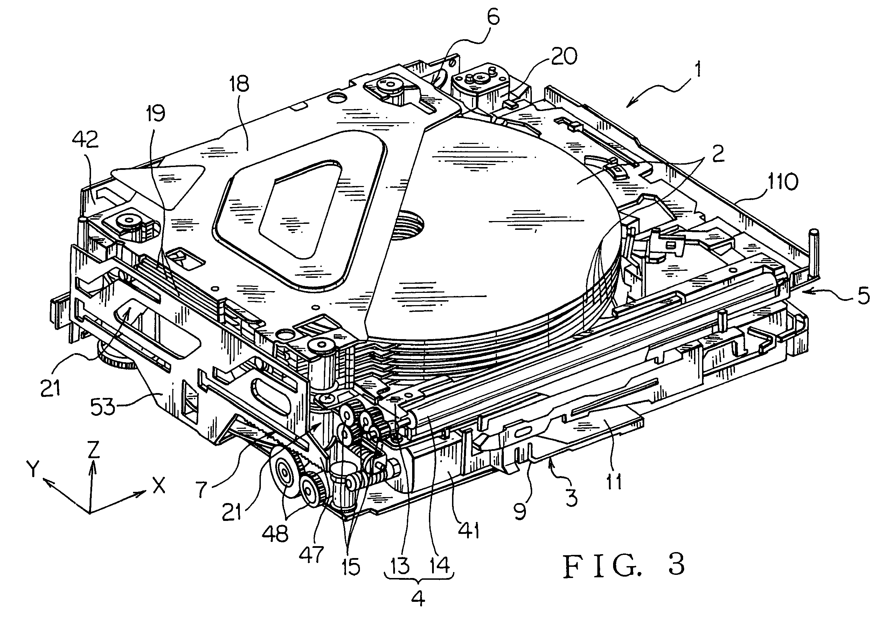

Hereunder a CD changer 1 as an embodiment of the playback apparatus for recording media according to the present invention will be described with reference to Figs. 2 to 52. As shown in Fig. 2, the CD changer 1 is mounted on a vehicle or the like, receives a plurality of CD 2 (shown in Fig. 3), reads (plays back) data out of the CD 2, and outputs the data as a sound signal. The CD 2 has a disk shape recording medium to be read by electronic equipment such as a computer.

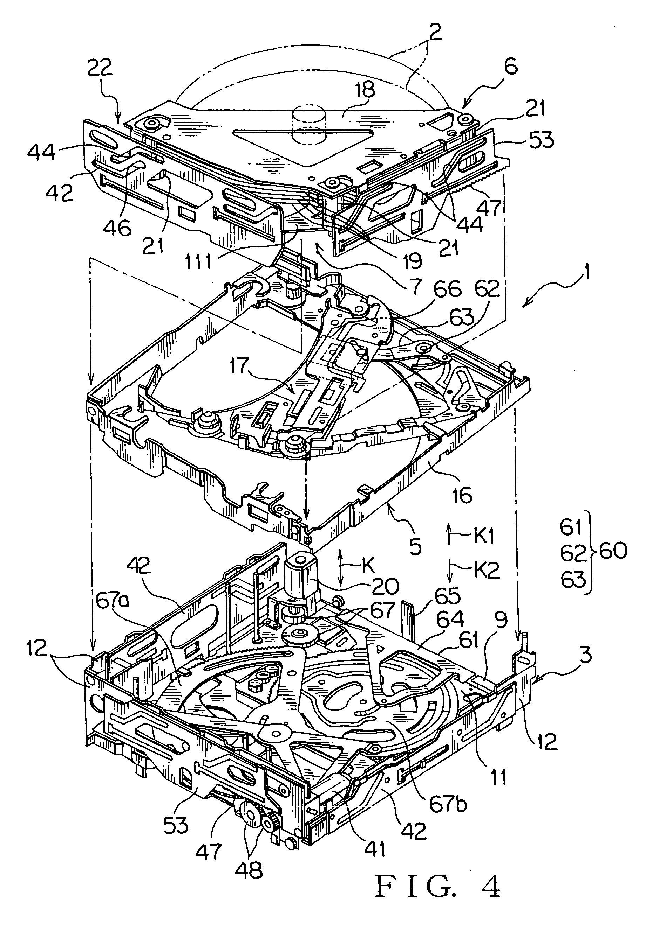

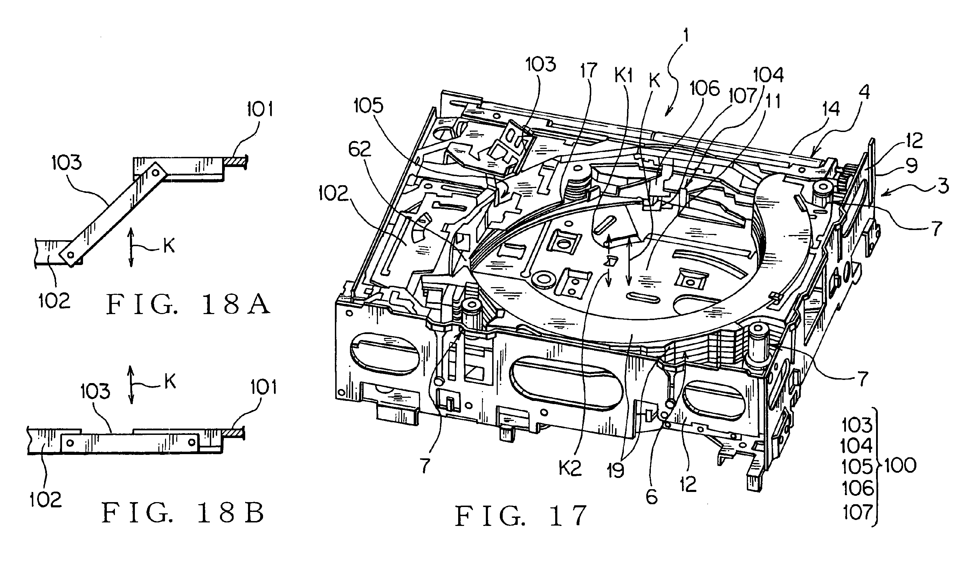

As shown in Fig. 3, the CD changer 1 includes a main body (shown in Fig. 2), a not-shown operation panel, a disk loader 4, a playback part 5, a transporting mechanism 60 (shown in Fig. 4), a disk receiver 6, a separating mechanism 7, and a stopper 100 (shown in Fig. 17). Hereunder, width, length, thickness directions of the CD changer 1 are respectively defined as arrows X, Y, Z of Fig. 3.

The main body of the playback apparatus 3 includes an outer case 8 made of metal plate as shown in Fig. 2, and a fixed chassis 9 made of metal plate as shown in Fig. 3. The outer case 8 is formed in a flat box shape. A slot 10 through which the CD 2 is inserted and ejected is disposed on the outer case 8. The slot 10 is a through- hole on an outer wall of the outer case 8. The CD 2 can be inserted through the slot 10. The CD 2 can be inserted into and ejected from the outer case 8 of the main body of the playback apparatus 3 through the slot 10.

The fixed chassis 9 is received in and fixed to the outer case 8. As shown in Fig. 4, the fixed chassis 9 includes a plate-shaped bottom wall 11, side walls 12 extending vertically from the bottom wall 11, and a top wall 101 (shown in Fig. 18A, 18B). The bottom wall 11 is overlapped on a bottom wall of the outer case 8 shown in Fig. 2. The top wall 101 is continued to the side walls 12 opposed to the bottom wall 11. The top wall 101 is disposed parallel to the bottom wall 11. The top wall 101 is disposed at a first side in this description, namely, at a later-described arrow K1 side. The bottom wall 11 is disposed at a second side, namely, at a later-described arrow K2 side.

The operation panel is separated from and connected to the main body of the playback apparatus 3. A user of the CD changer 1 pushes a button on the operation panel for operating. The operation panel is used for setting a later-described holder 19 for holding the CD 2 to be inserted into the main body of the playback apparatus 3 through the slot 10. The operation panel is used for setting the holder 19 holding the CD 2 to be ejected from the main body of the playback apparatus 3 through the slot 10. The operation panel is used for setting the CD 2 to be read out among the CDs 2 held by a plurality of the holders 19.

The disk loader 4 is received in the main body of the playback apparatus 3, and as shown in Fig. 3, includes a roller arm 13 and a roller 14. The roller arm 13 is made of metal plate or the like, and formed in a strip shape. A longitudinal direction of the roller arm 13 is disposed along the width direction X of the main body of the playback apparatus 3.

The roller arm 13 is disposed in the vicinity of the slot 10, and attached to a load frame 110 (shown in Fig. 3) which is attached to a moving chassis 16 which is supported movably up and down by the fixed chassis 9 of the main body of the playback apparatus 3.

The roller 14 is supported by the roller arm 13 rotatably about a shaft thereof. The shaft of the roller 14 is parallel to the width direction X of the CD changer 1. An outer wall of the roller 14 comes into contact with the CD 2 through the slot 10. A later-described motor 41 rotates the roller around the shaft thereof through a plurality of gears 15. The disk loader 4 inserts the CD 2 into the slot 10 by the outer wall of the roller 14 contacting the CD 2, and the motor 14 rotating the roller 14.

The playback part 5 is received in the main body of the playback apparatus 3. As shown in Fig. 4, the playback part 5 includes the moving chassis and a swinging chassis 17 and a not-shown pickup playback part. The moving chassis is made of metal plate or the like and formed in a frame shape. The moving chassis 16 is supported by the side walls 12 of the fixed chassis 9 movably along a stacking direction K (shown as an arrow in Fig. 3) of the holders 19 of the disk receiver 6.

The swinging chassis 17 is made of metal plate or the like, and formed on a band plate shape. The swinging chassis 17 is supported by the moving chassis 16 rotatably about one end thereof. By rotating about the one end, the other end of the swinging chassis 17 can be inserted among a plurality of CDs 2, and removed from the CDs 2.

The pickup playback part is mounted on a vibration isolated CRG chassis supported on the swinging chassis by a damper, a spring, and the like. The pickup playback part includes a turntable, a pickup part, and the like. The turntable includes a rotary table, a spindle motor, and a plurality of clamp nails. The rotary table is rotatably supported by the other end of the CRG chassis. The rotary table is formed in a disk shape on which the CD 2 is mounted. The spindle motor is interposed between the other end of the CRG chassis and the rotary table. The spindle motor rotates the rotary table. The clamp nail is mounted on the rotary table and can be projected from the table. When being projected from the rotary table, the clamping nail is projected through a center hole of the CD 2 mounted on the rotary table, and catches the CD 2 with the rotary table. Thus, the clamp nail clamps the CD 2.

The pickup part includes an optical pickup 66 shown as a two-dot chain line in Fig. 4, and a pickup moving part. The optical pickup 66 is supported by the CRG chassis movably in a direction of approaching the turntable. The optical pickup 66 reads out data from the CD 2 supported by the turntable. Namely, the optical pickup 66 plays back the CD 2 held in the holder 19. When playing back, the CD 2 is escaped from the holder 19 in the thickness direction Z. The pickup moving part moves the optical pickup 66 close to and away from the turntable.

In the playback part 5, the other end of the swinging chassis 17 is inserted among the CDs 2, and clamp nail clamps the CD 2 , and the rotary table of the turntable rotates the CD 2. In the playback part 5, the optical pickup 66 reads out data from the CD 2 rotated by the turntable. Further, the playback part 5 is moved in a direction of the arrow K as later described. Thus, the playback part 5 is moved along the arrow K, clamps and plays back the CD 2 held in the holder 19.

As shown in Fig. 4, the transporting mechanism 60 includes a first slide chassis 61, a second slide chassis 62, a swinging arm 63, and a retaining chassis 102 (shown in Fig. 17). The first slide chassis 61 is made of metal plate, and integrally includes a horizontal part 64 and a vertical piece 65. The horizontal part 64 is formed in a plate shape, and overlapped with the plate-shaped bottom wall 11 of the fixed chassis 9.

The horizontal part 64 is supported by the bottom wall 11 slidably along a longitudinal direction of the swinging chassis 17 of which the other end is removed from the CDs 2. The horizontal part 64 is moved along the longitudinal direction of the swinging chassis 17 of which the other end is removed from the CDs 2 by a driving force of a later-described motor 20 of the separating mechanism 7. The vertical piece 65 is extended from an edge of the horizontal part upward, namely, toward the second slide chassis 62.

The second slide chassis 62 is formed in a plate shape. The second slide chassis 62 is interposed between the moving chassis 16 and the bottom wall 11, and overlapped with the moving chassis 16. The second slide chassis 62 is supported by the moving chassis 16 slidably along the longitudinal direction of the swinging chassis of which the other part is removed from the CDs 2.

The vertical piece 65 is locked on the second slide chassis 62. Therefore, the second slide chassis 62 and the vertical piece 65 are moved along the longitudinal direction of the swinging chassis of which the other part is removed from the CDs 2 by the driving force of the motor 20.

The swinging arm 63 is made of metal plate, and formed in a plate shape. As shown in Fig. 4, a planar shape of the swinging arm 63 is formed in substantially a V-shape. The swinging arm 63 is rotatably supported by the moving chassis 16 about the center thereof. One end of the swinging arm 63 is connected to the second slide chassis 62. The other end of the swinging arm 63 is rotatably connected to the swinging chassis 17. The swinging arm 63 swings the swinging chassis 17 about the one end of the swinging chassis 17 when the second slide chassis 62 slides along the longitudinal direction.

The retaining chassis 102 is made of metal plate, and formed in a plate shape. The retaining chassis 102 is overlapped with the second slide chassis 62, and attached to the moving chassis 16.

The transporting mechanism 60 moves the first slide chassis 61 and the second slide chassis 62 by the driving force of the motor 20, and rotates the swinging arm 63 to swing the swinging chassis 17 about the one end thereof. The transporting mechanism 60 swings the swinging chassis 17 about the one end thereof to move the optical pickup 66, namely the playback part 5, to a position opposed to a data recording surface of the CD 2 held in the holder 19.

The disk receiver 6 is received in the main body of the playback apparatus 3, and as shown in Fig. 4, includes a moving chassis 18 as a first wall and a plurality of the holders 19. The moving chassis 18 is made of metal plate, and formed in a plate shape. The moving chassis 18 is disposed parallel to the bottom wall 11 of the fixed chassis 9 with a gap. The playback part 5 is interposed between the moving chassis 18 and the bottom wall 11 of the fixed chassis 9. The moving chassis 18 is supported by the side walls 12 and the like movably along the arrow K.

The holders 19 are supported movably up and down by the fixed chassis 9 parallel to both the bottom wall 11 and the moving chassis 18. Later-described holder bodies of the holders 19 are overlapped with each other in a direction (arrow K) where the bottom wall 11 and the moving chassis 18 are overlapped with each other.

As shown in Fig. 16, the holder 19 includes a holder body 80, a first locking member 81, a second locking member 82, and the third locking member 83. The holder body is made of synthetic resin, and formed in a plate shape. The holder body 80 includes integrally a retainer 84 and a flange 85.

The retainer 84 is formed in a plate shape. A planar shape of the retainer 84 is formed in a C-shape (half-ring shape). Therefore, a planar shape of the holder body 80 is formed in a C-shape. The CD 2 is disposed on a surface of the retainer 84. Therefore, the CD 2 is disposed on a surface of the holder body 80.

The flange 85 is extended vertically from an outer edge of an outer circumference of the retainer 84, and extended in an outer radial direction of the retainer 84. Therefore, the CD 2 disposed on the flange 85 is positioned on the retainer 84 by touching an inner edge 85a of the flange 85. For this purpose, the holder 19 includes the inner edge 85a touching an outer edge of the CD 2 held in the holder 19. In the holder body 80, an opening formed in C-shape of the retainer 84 is disposed in a manner to face the slot 10.

The first locking member 81 is made of synthetic resin, and formed in a band plate shape and an arm shape. The first locking member 81 is supported rotatably about a center part 81c in the longitudinal direction thereof by the flange 85 disposed at one end 80a of the holder body 80 on a left side of Fig. 16. Thus, the first locking member 81 is disposed rotatably at the one end 80a of the holder body 80.

In the first locking member 81, a locking nail 86 is disposed on an end 81a on a center front of Fig. 16 (a rear end of the holder body 80). The first locking member 81 is rotatable between a locking position where the locking nail 86 is projected from an inner edge of the flange 85 to the retainer 84 as shown in Fig. 16 and a not-shown unlocking position where the locking nail 86 is under the inner edge of the flange 85 and away from the retainer 84.

The first locking member 81 is rotatable between the locking and unlocking positions and is prevented from rotating over the locking and unlocking positions. The locking nail 86 positions an outer edge of the CD 2 at the locking position on the retainer 84, namely the holder body 80, and locks the outer edge of the CD 2. Thus, the first locking member 81 locks the outer edge of the CD 2 positioned on the retainer 84 of the holder body 80.

The second locking member 82 is made of synthetic resin, and formed in a band plate shape and in an arm shape. The second locking member 82 is supported rotatably and slidably about a center part 82c in the longitudinal direction thereof by the flange 85 disposed at the other end 80b of the holder body 80 on a right side of Fig. 16. Thus, the second locking member 82 is disposed rotatably and slidably on the other end 80b of the holder body 80.

In the second locking member 82, a locking nail 87 is disposed on an end 82a on a center front of Fig. 16 (a rear end of the holder body 80). The second locking member 82 is rotatable and slidable between a locking position where the locking nail 87 is projected from an inner edge of the flange 85 to the retainer 84 as shown in Fig. 16 and a not-shown unlocking position where the locking nail 87 is under the inner edge of the flange 85 and away from the retainer 84.

The second locking member 82 is rotatable between the locking and unlocking positions and is prevented from rotating over the locking and unlocking positions. The locking nail 87 positions an outer edge of the CD 2 at the locking position on the retainer 84, namely the holder body 80, and locks the outer edge of the CD 2. Thus, the second locking member 82 locks the outer edge of the CD 2 positioned on the retainer 84 of the holder body 80.

A twisted coil spring 88 attached to the flange 85 of the holder body 80 urges the second locking member 82 in a direction where the locking nail 87 is projected from the inner edge of the flange 85 to the retainer 84, namely the locking position. Namely, the second locking member 82 is urged in a direction where the locking nail 87 is locked on an outer edge of the CD 2 on the holder body 80 (toward an inside of the retainer 84).

The third locking member 83 is made of synthetic resin, and formed in a band plate shape and in an arm shape. The third locking member 83 is supported rotatably about a center part 83c in the longitudinal direction thereof by the flange 85 disposed at the center part 80c between the one end 80a and the other end 80b of the holder body 80. Thus, the second locking member 82 is disposed rotatably between the one end 80a and the other end 80b of the holder body 80.

In the third locking member 83, a locking nail 89 is disposed on an one end 83a on a center back of Fig. 16 (a center of the holder body 80). The third locking member 83 is rotatable between a locking position where the locking nail 89 is projected from an inner edge of the flange 85 to the retainer 84 as shown in Fig. 16 and a not-shown unlocking position where the locking nail 89 is under the inner edge of the flange 85 and away from the retainer 84.

The third locking member 83 is rotatable between the locking and unlocking positions and is prevented from rotating over the locking and unlocking positions. The locking nail 89 positions an outer edge of the CD 2 at the locking position on the retainer 84, namely the holder body 80, and locks the outer edge of the CD 2. Thus, the third locking member 83 locks the outer edge of the CD 2 positioned on the retainer 84 of the holder body 80.

Further, the other end 83b of the third locking member 83 is disposed at a position nearer the retainer 84 than the other end 81b of the first locking member 81, namely an inside of the holder body 80, and contacts the other end 81b of the first locking member 81. A twisted coil spring 90 attached to the flange 85 of the holder body 80 urges the third locking member 83 in a direction where the locking nail 89 is projected from the inner edge of the flange 85 to the retainer 84, namely the locking position. Namely, the third locking member 83 is urged in a direction where the locking nail 89 is locked on an outer edge of the CD 2 on the holder body 80 (toward an inside of the retainer 84).

Because the other end 83b of the third locking member 83 is disposed at a position nearer the retainer 84 than the other end 81b of the first locking member 81, namely an inside of the holder body 80, and contacts the other end 81b of the first locking member 81, the twisted coil spring 90 urges the first locking member 81 in a direction where the locking nail 86 projects from the inside of the flange 85 to the retainer 84, namely, toward the locking position. Therefore, the first locking member 81 is urged in a direction where the locking nail 86 is locked at an outer edge of the CD 2 on the holder body 80 (toward an inside of the retainer 84).

Further, the first locking member 81 and the third locking member 83 are urged by the same twisted coil spring 90. Therefore, the third locking member 83 and any one of the first locking member 81 and the second locking member 82 are urged by the same twisted coil spring 90.

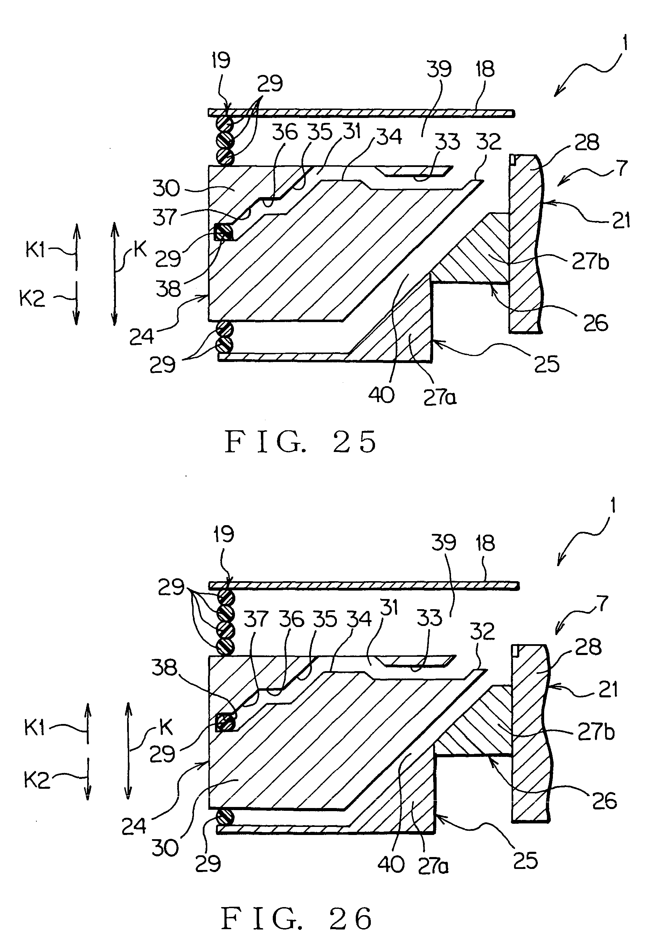

In the holder 19, the CD 2 is inserted into the main body of the playback apparatus 3 via the slot 10, then positioned on the retainer 84 via the opening of the holder body 80, and locked by the locking nails 86, 87, 89 at the outer edge of the CD 2. A plurality of the holders 19 are overlapped with each other in a manner that surfaces of the CDs 2 held in the holders 19 are parallel to each other. The holder 19 is supported by such as the fixed chassis 9 movably up and down along the arrow K. An outer projection 29 is disposed on each holder body 80 of the holder 19 (shown in Figs. 16 and 25). The disk receiver 6 receives stacked holders 19 which can hold the CDs 2.

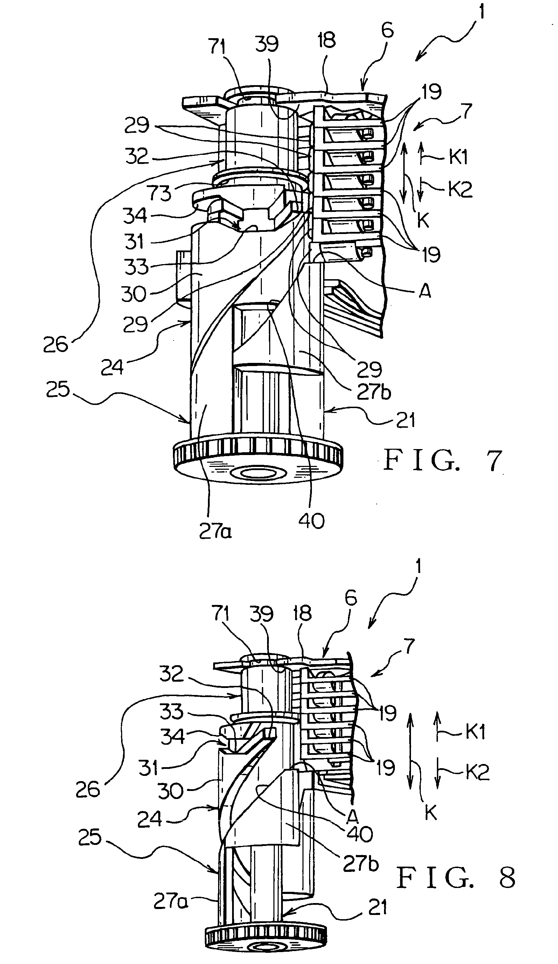

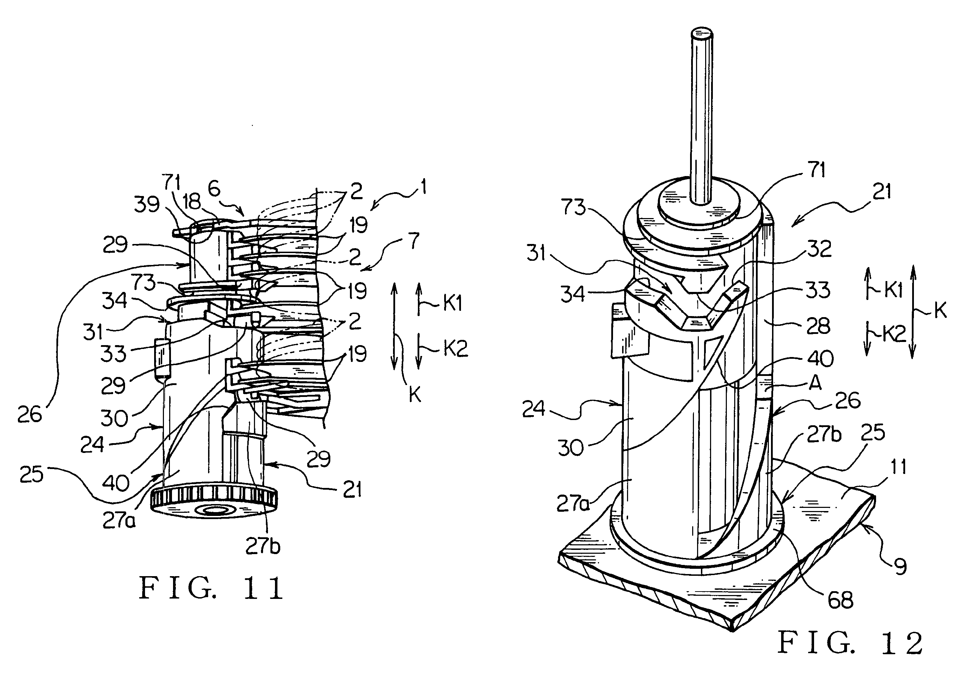

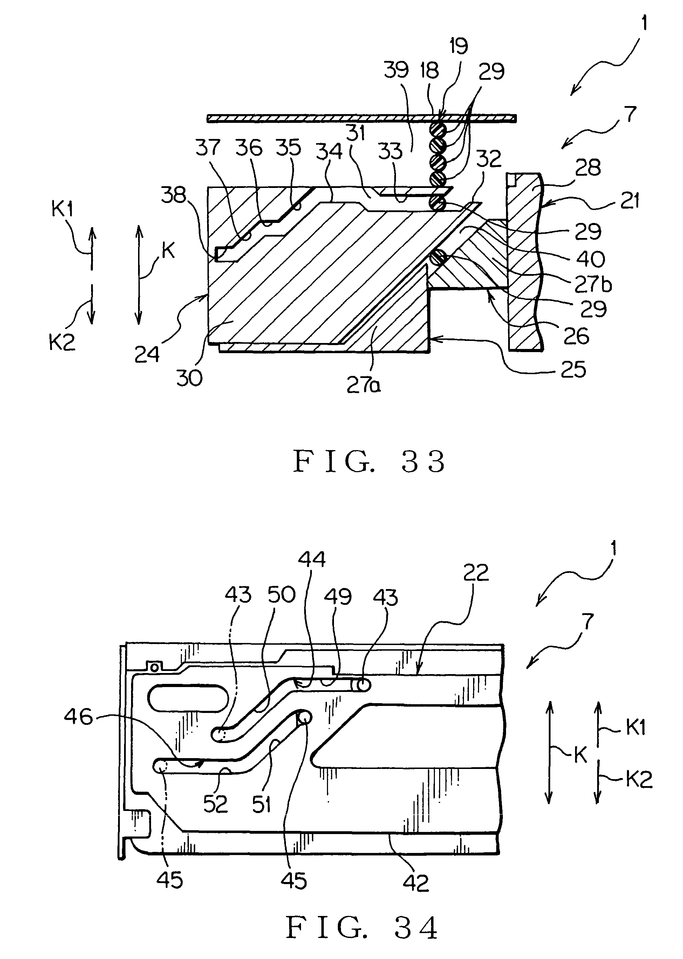

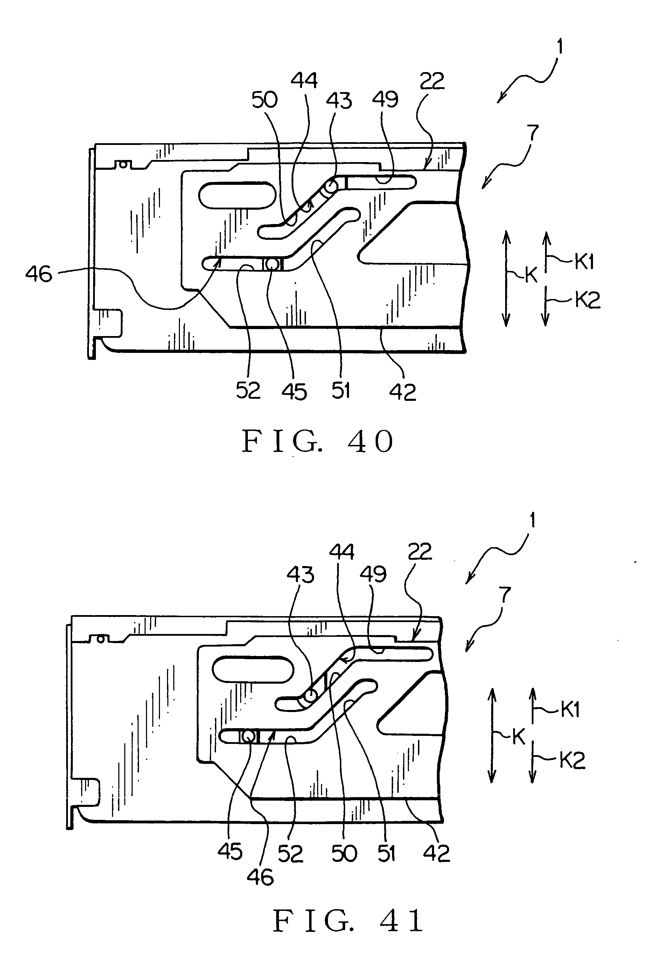

The separating mechanism 7 is received in the main body of the playback apparatus 3, and includes a motor (shown in Fig. 4), a spaced groove expansion mechanism 21 (shown in Figs. 7 and 11), and cooperative moving mechanism 22 (shown in Figs. 34,41). As shown in Fig. 4, the motor 20 is fixed to the fixed chassis 9.

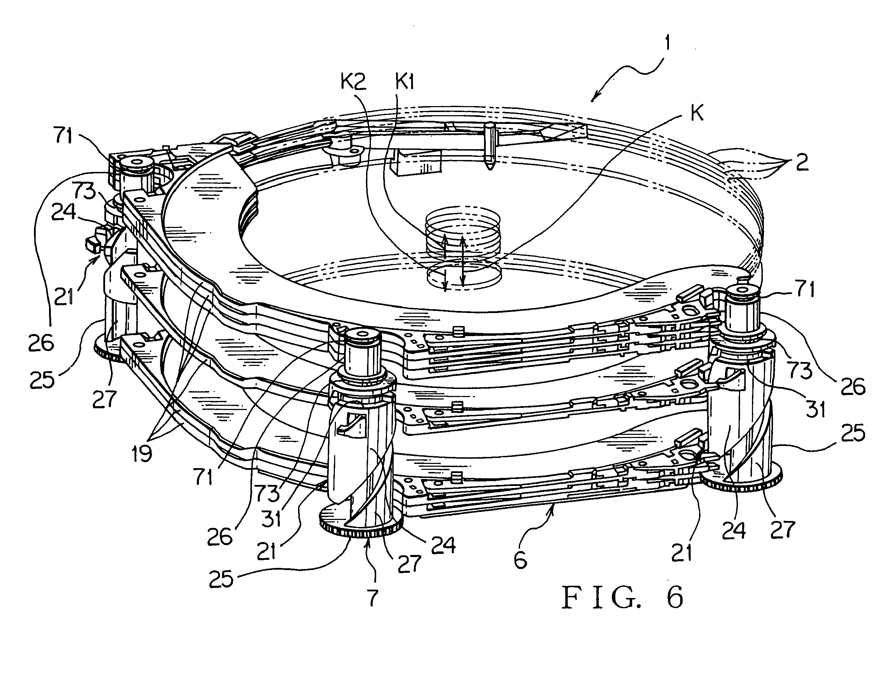

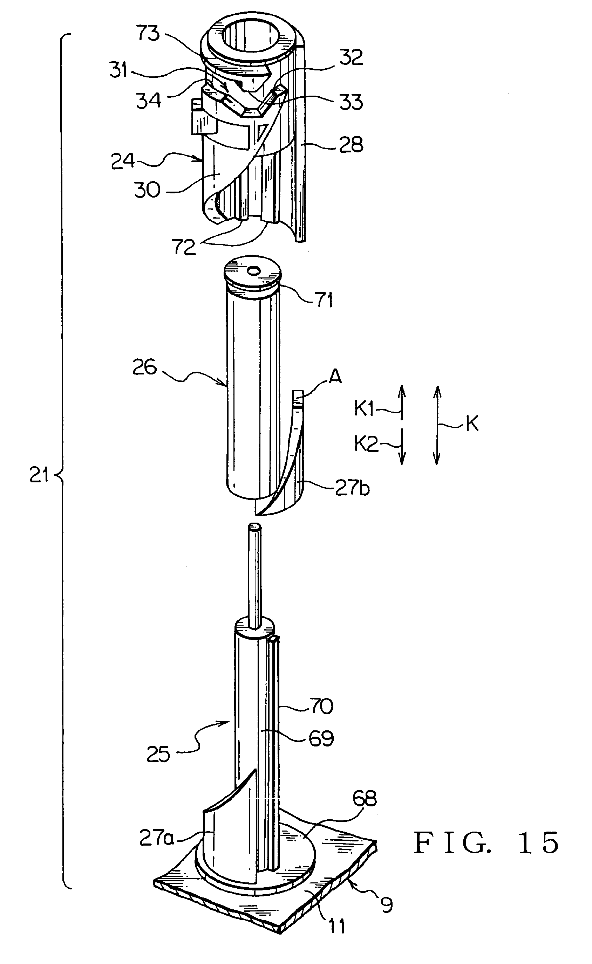

As shown in Fig. 6, three of the spaced groove expansion mechanisms 21 are mounted on the three corners of the main body of the playback apparatus 3. As shown in Figs. 7 and 15, the groove expansion mechanism 21 is formed in a column shape, and includes a rotating member 25, a moving member 26, and a cam member 24.

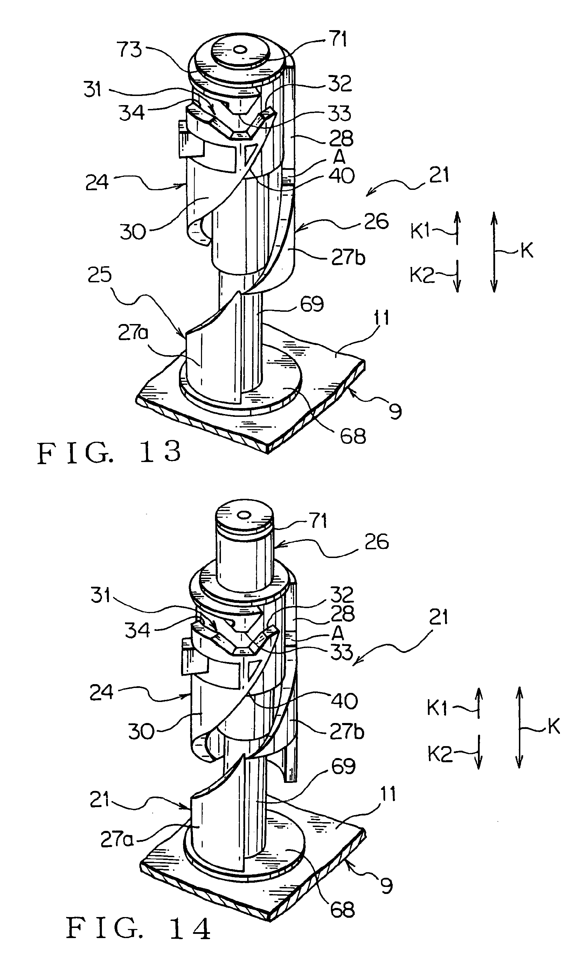

As shown in Figs. 13 to 15, the rotating member 25 includes a disk part 68 and a column part 69 coaxially integrated with each other. The disk part 78 is formed in a disk shape, and supported by the bottom wall 11 of the fixed chassis 9 rotatably about a shaft thereof. The column part 69 is formed in a column shape, and extended vertically from the disk part 68.

The shaft of the rotating member 25 is disposed parallel to the arrow K In the rotating member 25, teeth disposed on an outer edge of the disk part 68 is engaged with a plurality of gears 67 disposed rotatably on the bottom wall 11. A cam 67a on the cam 67b connected to a pinion of the motor 20 via the gears 67 rotates the rotating member 25 about the shaft thereof by the driving force of the motor 20. This means that the motor 20 moves the rotating member 25 by the driving force of the motor 20. The rotating member 25 positions the moving member 26 and the cam member 24 coaxially, and rotates the moving member 26 and the cam member 24.

As shown in Figs. 12 to 15, the moving member 26 is formed in a circular pipe shape, and attached to the outer periphery of the rotating member 25 coaxially. The moving member 26 and the rotating member 25 are attached to each other with a key composed of a projection 70 mounted on the rotating member 25 and a key groove mounted on the moving member 26. The moving member 26 is attached to the rotating member 25 movably along the arrow K. The moving member 26 is movable along the arrow K independently from the cam member 24. Further, a locking groove 71 is disposed on an edge (top end) of the moving member 26 away from the bottom wall 11. The moving member 26 and the rotating member 25 are integrally rotated about the shaft thereof.

Further, as shown in Figs. 7, 19 to 33, the moving member 26 is attached to the moving chassis 18 as a first wall, and a second wall 27b is mounted on the moving member 26. The moving chassis 18 and the second wall 27b are disposed on both edges respectively of the moving member 26 in the shaft direction, having a specific interval along the shaft which is parallel to the arrow K. The moving chassis 18 and the second wall 27b are projected outward in a radial direction from both edges of the moving member 26.

The moving member 26 is attached to the moving chassis 18 by the locking groove 71 that is mounted on the fixed chassis 9 away from the bottom wall 11. This is described in this present invention that the moving chassis 18 as the first wall is mounted on an upper end of the moving member 26. Thus, the moving member 26 and the moving chassis 18 are integrally moved along the arrow K. Further, the moving chassis 18 allows the moving member 26 to rotate about the shaft thereof. The moving chassis 18 is formed in a plate shape extended in a direction perpendicular to the arrow K.

The second walls 27a, 27b are extended from the rotating member 25 to the moving member 26. As shown in Figs. 12 to 15, in the rotating member 25, the second wall 27a is extended vertically from an outer edge of the disk part 68, and a cross-section of the second wall 27a is formed in an arc shape about the shaft of the rotating member 25. Thus, the second wall 27a is arranged in an outer circumference of the disk part 68.

In the moving member 26, as shown in Figs. 12 to 15, the second wall 27b is disposed on an edge of the fixed chassis 9 next to the bottom wall 11 (namely, a bottom end of the moving member 26). The second wall 27b is arranged in an outer circumference of the moving member 26, and coaxially with the moving member 26. The second walls 27a, 27b are arranged in a same surface from the rotating member 25 to the moving member 26. As the second walls 27a, 27b are extended from the moving member 26 to the rotating member 25, the second walls 27a, 27b are away from the moving chassis 18, and extended in both the arrow K and the direction perpendicular to the arrow K.
In an area between the moving chassis 18 and the second walls 27a, 27b, in an area where a later-described wedge part 30 of the cam member 24 is not positioned in between the moving chassis 18 and the second walls 27a, 27b along the arrow K, an interval between the moving chassis 18 and the second walls 27a, 27b is equal to or substantially equal to the product of the number of the holders 19 and a groove width of the projection 29 in the direction of the arrow K.

The rotating member 25 and the moving member 26 supports the holder 19 by positioning the projection 29 between the moving chassis 18 and the second walls 27a, 27b. Further, by rotating about the shaft, the rotating member 25 and the moving member 26 allows the projection 29 to move in a direction perpendicular to the arrow K in a manner to move away from a later-described connecting wall 28 in between the moving chassis 18 and the second walls 27a, 27b. Therefore, the cam member 24, the rotating member 25, and the moving member 26 are moved by the driving force of the motor 20 in a direction where the projection 29 is inserted into later-described spaced grooves 39, 40. Further, the cam member 24, the rotating member 25, and the moving member 26 position the projections 29 of all the holders 19 in between the moving chassis 18 and the second walls 27a, 27b at a later-described receiving position.

As shown in Figs. 12 to 15, the cam member 24 is formed in a circular pipe shape, attached to an outer circumference of the moving member 26, and arranged coaxially with the rotating member 25, the moving member 26 and the like. The cam member 24 and the moving member 26 are attached to each other with a key composed of projections 72 mounted on the cam member 24 and a projection mounted on the moving member 26. The cam member 24 is attached to the moving member 26 movably along the arrow K. The cam member 24 is rotated integrally with the rotating member 25 and the moving member 26 about the shaft.

Further, a locking groove 73 is disposed on the cam member 24 away from the bottom wall 11. The moving chassis 16 of the playback part 5 is locked and attached to the locking groove 73 of the cam member 24. Therefore, the cam member 24 is moved integrally with the moving chassis 16, namely the optical pickup 66, along the arrow K. Thus, the cam member 24 is movable along the arrow K. Further, the moving chassis 16 allows the cam member 24 and the like to rotate about the shaft.

Further, the cam member 24 includes the wedge part 30, a guiding groove 31, and the connecting wall 28. The wedge part 30 is interposed between the moving chassis 18 and the second wall 27, and arranged with a gap to the connecting wall 28. Thus, the wedge part 30 of the cam member 24 is moved between the moving chassis 18 and the second walls 27 along the arrow K. The wedge part 30 is formed in a manner that as moving toward the moving member 26, the groove width along the arrow K is decreased.

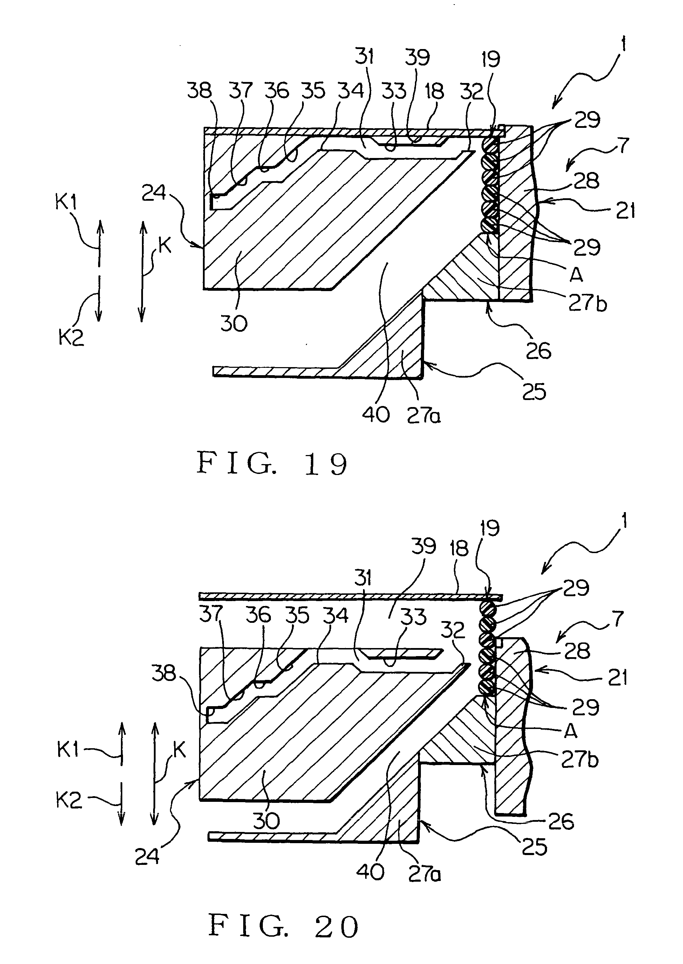

The guiding groove 31 is mounted on the wedge part 30. The guiding groove 31 is formed on an outer circumference of the wedge part 30 of the cam member 24. Namely, the guiding groove 31 is a concave on the outer circumference of the wedge part 30. The groove width of the guiding groove 31 is substantially equal to a width of the projection 29 along the arrow K. As shown in Figs. 19 to 33, the guiding groove 31 includes an opening part 32 facing the connecting wall 28, a loading part 33, a pickup insertion part 34, a first connecting part 35, a clamp part 36, a second connecting part 37, a playback part 38. The loading part 33, the pickup insertion part 34, the clamp part 36, the playback part 38 are extended in a direction perpendicular to the arrow K. The first connecting part 35 and the second connecting part 37 are extended in a direction perpendicular to both the arrow K and the direction perpendicular to the arrow K.

The loading part 33 is continued to the opening part 32, and disposed on the opening part 32 away from the connecting wall 28. The pickup part 34 is continued to the loading part 33, and disposed on the loading part 33 away from the connecting wall 28. The pickup insertion part 34 is positioned farther than the loading part 33 from the second walls 27 of the rotating member 25.

The first connecting part 35 is continued to the pickup insertion part 34, and disposed on the pickup insertion part 34 away from the connecting wall 28. As the first connecting part 35 is removed from the pickup insertion part 34, the first connecting part 35 is extended nearer the second walls 27 of the rotating member 25. The clamp part 36 is connected to the first connecting part 35, and disposed on the first connecting part 35 away from the connecting wall 28. The second connecting part 37 is connected to the clamp part 36, and disposed on the clamp part 36 away from the connecting wall 28. As the second connecting part 37 is removed from the clamp part 36, the second connecting part 37 is extended nearer the second walls 27 of the rotating member 25. The playback part 38 is connected to the second connecting part 37, and disposed on the second connecting part 37 away from the connecting wall 28.

The guiding groove 31 allows the projection 29 to be inserted through the opening part 32. Namely, the projection 29, namely, the holder 19 is slidable in the guiding groove 31. Further, the guiding groove 31 allows the projection 29 to move sequentially into the loading part 33, the pickup insertion part 34, the first connecting part 35, the clamp part 36, the second connecting part 37, and the playback part 38.

The holder 19 having the projection 29 positioned in the loading part 33 faces the frame 10 along the arrow Y. The holder 19 having the projection 29 positioned in the loading part 33 can hold the CD 2 inserted through the slot 10, and eject the CD 2 through the slot 10 out of the main body of the playback apparatus 3.

The holder 19 having the projection 29 positioned in the pickup insertion part 34 is removed from the other holders 19 disposed on the bottom of Fig. 3 and allows the other end of the swinging chassis 17, namely the pickup playback part to be inserted between the holders 19 disposed on the bottom of Fig. 3. The holder 19 having the projection 29 positioned in the clamp part 36 allows the turntable of the playback part 5 to clamp the CD 2 held by the holder 19. The holder 19 having the projection 29 positioned in the playback part 38 is removed from the CD 2 clamped by the turntable, and does not interfere with the CD 2 rotated by the turntable. Namely, the holder 19 allows the CD 2 to be rotated.

The connecting wall 28 is extended in a straight line along the arrow K. The connecting wall 28 faces the opening part 32 of the guiding groove 31 disposed on the wedge part 30 with a gap in a direction perpendicular to the arrow K. The connecting wall 28 is formed by connecting the moving chassis 18 and the second walls 27 to each other.

Thus, the cam member 24 includes the guiding groove 31 with which the projection 29 slidably engaged, said projection of which the holder 19 holds one CD 2.

As shown in Fig. 12, the rotating member 25, the moving member 26, and the cam member 24 are arranged coaxially. As shown in Figs. 12 to 14, the moving member 26 and the cam member 24 are movable along the arrow K independently from each other.

Further, a first spaced groove 39 is a groove between the moving chassis 18 and the wedge part 30 of the cam member 24. The first spaced groove 39 is composed of the moving chassis 18, and a top plate of the wedge part 30 away from the bottom wall 11. The first spaced groove 39 is engaged with the other holders 19 upper (the arrow K1 side) than the holder holding the one CD 2 engaging with the guiding groove 31.

Further, a second spaced groove 40 is a groove between the second walls 27 and the wedge part 30 of the cam member 24. The second spaced groove 40 is composed of the second walls 27 and a lower wall of the wedge part 30 near the bottom wall 11. The second spaced groove 40 is engaged with the other holders lower (the arrow K2 side) than the holder holding the one CD 2 engaging with the guiding groove 31.

The projection 29 of the holders 19 other than the holder holding the one CD 2 engaging with the guiding groove 31 can be inserted into between the first spaced groove 39 and the second spaced groove 40. Spaced grooves in this description are the first spaced groove 39 and the second spaced groove 40. The first spaced groove 39 and the second spaced groove 40, namely, the spaced grooves are made by slidably engaging the holders other than the holder holding the one CD 2, and moving the cam member 24 and the moving member 26 relative to each other.

An interval between the first spaced groove 39 and the second spaced groove 40 are varied because the cam member 24 and the moving member are relatively moved along the arrow K. When the cam member 24 is slid along the arrow K, the gap of the first spaced groove 39 is increased and the gap of the second spaced groove 40 is decreased, or vice versa.

Further, the sum of the gaps of the first spaced groove 39 and the second spaced groove 40 is equal to or substantially equal to the product of the number of the number of the holders 19 minus one and a width of the projection 29 in the direction of the arrow K. The intervals of the first spaced groove 39 and the second spaced groove 40 are varied by the cam member 24 and the moving member 26 relatively moving along the arrow K. Namely, moving the cam member 24 and the moving member 26 relative to each other varies the gaps of the first spaced groove 39 and the second spaced groove 40 along the direction K.

According to the above, among the projections 29 of all the holders 19 between the moving chassis 18 and the second walls 27, one projection 29 is inserted into the guiding groove 31 by transmitting the driving force of the motor 20 through a plurality of the gears 67 and integrally rotating the rotating member 25, the moving member 26 and the cam member 24. As shown in Fig. 7, the projections 29 of the holders 19 nearer the arrow K1 side than the projection 29 inserted into the guiding groove 31 are inserted into the first spaced groove 39, and the projections 29 of the holders nearer the arrow K2 than the projection 29 inserted into the guiding groove 31 are inserted into the second spaced groove 40. Incidentally, the arrow K1 is one side of the arrow K and the arrow K2 is the other side of the arrow K.

In this description, the state that the projections 29 of all the holders 19 are not inserted into the guiding groove 31, but moved toward the connecting wall 28 and interposed between the moving chassis 18 and the second walls 27 is defined as that the holders 19 are positioned in a receiving position. In the receiving position, because the wedge part 30 of the cam member 24 is spaced with the connecting wall 28, the first spaced groove 39 and the second spaced groove 40 are integrated with each other. Therefore, in the receiving position, the holders 19 are close to each other.

In this description, a state that the projection 29 is inserted into the playback part 38 of the guiding groove 31 and insides of the first spaced groove 39 and the second spaced groove 40 is defined as that the holder 19 is in a playback position. In the playback position, owing to the wedge part 30 of the cam member 24, the holder 19 of which projection 29 is inserted into the guiding groove 31 is removed from the other holders in the receiving position. In the playback position, the holder holding the CD 2 to be played back is removed from the other holders 19, and the optical pickup 66 can be inserted into between the holder holding the CD 2 to be played back and the other holders 19.

A state that the projection 29 is interposed between the second walls 27 of the moving member 26 and the moving chassis 18, and inserted into the loading part 33, the first spaced groove 39, and the second spaced groove 40 is defined as that the holder 19 is in a loading position.

Further, in the playback position, the projections 29 of the holders 19 at the arrow K1 side from the holder 19 holding the CD 2 to be played back are inserted into the first spaced groove 39. The first spaced groove 39 removes the holders at the arrow K1 side from the holder 19 holding the CD 2 to be played back.

Further, in the playback and loading positions, the projections 29 of the holders 19 at the arrow K2 side from the holder 19 holding the CD 2 to be played back are inserted into the second spaced groove 40. The second spaced groove 40 removes the holders at the arrow K2 side from the holder 19 holding the CD 2 to be played back.

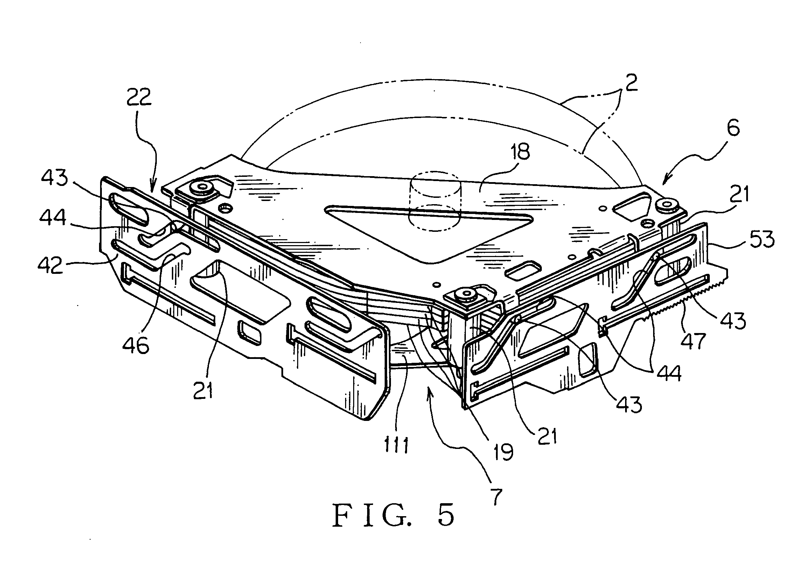

As shown in Fig. 34, the cooperative moving mechanism 22 includes the motor 41 (shown in Fig. 4), a driving chassis 42 (shown in Figs. 4 and 5), a second driving chassis 53 (shown in Figs. 4 and 5), first projections 43, first holes 44, a second projection 45, and a second hole 46. In Fig. 4, two driving chassis 42 and two second driving chassis 53 are shown. However, actually, one driving chassis 42 and one second driving chassis 53 are mounted.

In the cooperative moving mechanism 22, when the holders 19 in the disk receiver 6 are moved from the receiving position to the playback position, the moving member 26 is moved along the arrow K relative to the rotating member 25 so as to locate the moving member 26 the farthest away from the rotating member 25. Then, the cooperative moving mechanism 22 positions the cam member 24 to the position where the projection 29 of the holders 19 holding the CD 2 to be positioned in a playback position is allowed to be inserted into the guiding groove 31.

When the holders 19 in the disk receiver 6 are moved between the playback position and the loading position, namely, when the CD 2 is inserted into or removed from the main body, the cooperative moving mechanism 22 moves the cam member 24 relative to the moving member 26 along the arrow K to position the cam member 24 at the closest position to the rotating member 25. Then, the cooperative moving mechanism 22 positions the moving member 26 at a position where the projection 29 of the holders 19 holding the CD 2 which is positioned at the loading position can be inserted into the guiding groove 31. Owing to the driving force of the motor 41, the cooperative moving mechanism 22 moves the cam member 24, namely the moving chassis 16 of the playback part 5, and the moving member 26, namely the moving chassis 18 of the disk receiver 6 together along the arrow K.

The motor 41 is attached to such as the bottom wall 11 of the fixed chassis 9. The driving chassis 42 is made of such as metal plate, and formed in a plate shape. In a plan view, the driving chassis 42 is in a rectangular shape. The side walls 12 of the fixed chassis 9 of the main body of the playback apparatus 3 support the driving chassis 42 movably in a direction perpendicular to the arrow K.

The second driving chassis 53 is made of metal plate, and formed in a plate shape. In a plan view, the second driving chassis 53 is in a rectangular shape. The side walls 12 of the fixed chassis 9 of the main body of the playback apparatus 3 support the second driving chassis 53 movably in a direction perpendicular to the arrow K. Gears 48 rotated by the driving force of the motor 41 and a rack 47 engaged with the gears 48 are formed in the second driving chassis 53.

The first projections 43 are projected from the moving chassis 18 of the disk receiver 6 toward the driving chassis 42 and the second driving chassis 53. The first holes 44 are mounted on the driving chassis 42 and the second driving chassis 53. Of course, the first holes 44 penetrate the driving chassis 42 and the second driving chassis 53. As shown in Fig. 5, the first projections 43 are inserted into the first holes 44.

As shown in Figs. 34 to 41, each first hole 44 includes a first parallel part 49 and a first slope part 50. The first parallel part 49 is extended straightly in a direction perpendicular to the arrow K. The first slope part 50 is continued to an end of the first.parallel part 49 and extended straightly in a direction perpendicular to both the arrow K and the direction perpendicular to the arrow K The first slope part 50 is inclined in a direction from the first parallel part 49 to the bottom wall 11 of the fixed chassis 9.

The second projection 45 projects from the moving chassis 16 of the playback part 5 to the driving chassis 42. The second hole 46 is mounted on the driving chassis 42. Of course, the second hole 46 penetrates the driving chassis 42.

The second hole 46 includes a second slope part 51 and a second parallel part 52. The second slope part 51 is extended straightly in a direction perpendicular to both the arrow K and the direction perpendicular to the arrow K. The second slope part 51 is inclined in a direction from the first parallel part 49 to the bottom wall 11 of the fixed chassis 9. The second slope part 51 is parallel to the first slope part 50. The second parallel part 52 is continued to an end of the second slope part 51 and extended straightly in a direction perpendicular to the arrow K.

When the first projections 43 are positioned in the first slope parts 50, the second projection 45 is positioned in the second parallel part 52. When the first projections 43 are positioned in the first parallel parts 49, the second projection 45 is positioned in the second slope part 51.

The cooperative moving mechanism 22 is moved on the second driving chassis 53 in a direction perpendicular to the arrow K by the driving force of the motor 41. Together with the movement of the second driving chassis 53, the driving chassis 42 connected to the second driving chassis 53 is moved in a direction perpendicular to the arrow K by a link arm 111 shown in Fig. 4.

For this purpose, the cooperative moving mechanism 22, namely the separating mechanism 7 includes the motor 41 as a single driving source for moving the cam member 24 and the moving member 26 along the arrow K.

The cooperative moving mechanism 22 positions the driving chassis 42 at a position where the second projection 45 is moved in the second parallel part 52, and the first projections 43 is moved in the first slope part 50 by the driving force of the motor 41, when positioning the holders 19 at the loading position, namely, when inserting or removing the CD 2 from the main body of the playback apparatus 3. The cooperative moving mechanism 22 positions the driving chassis 42 at a position where the second projection 45 is moved in the second slope part 51, and the first projections 43 is moved in the first parallel part 49, when moving the holders 19 between the playback and receiving positions.

When the cooperative moving mechanism 22 positions the second projection 45 in the second parallel part 52, the cam member 24 is at the closest position to the second walls 27 of the rotating member 25. The holder 19, of which projection 29 is positioned inside the loading part 33 of the guiding groove 31 of the cam member 24 at the closest position to the second walls 27 of the rotating member 25, is positioned to a position where the holder 19 can hold the CD 2 to be inserted or removed through the slot 10.

As shown in Fig. 17, the stopper 100 includes a first stopper 103, a second stopper 104, a swing stopper 105, an up-down stopper 106, and an auxiliary stopper 107. The first stopper 103 is made of synthetic resin, and formed in a plate shape. The first stopper 103 is interposed between the slot 10 and the holders 19. Further, the first stopper 103 is positioned at a position where the first stopper 103 faces the holder 19 holding the CD 2 across the CD 2.

As shown in Fig. 18A, 18B, one end of the first stopper 103 is rotatably supported by the retaining chassis 102, and the other end of the first stopper 103 is slidably supported by the top wall 101. Thus, the first stopper 103 is attached to the top wall 101. Further, when the moving chassis 16, namely the optical pickup 66 of the playback part 5 or the like are moved along the arrow K, the first stopper 103 is transferred between states shown in Figs. 18A and 18B.

In the state shown in Fig. 18A, the moving chassis 16, namely the playback part 5 is at the furthest position from the top wall 101, and the first stopper 103 is inclined toward both the arrow K and surfaces of the moving chassis 16 and the top wall 101. In the state shown in Fig. 18B, the moving chassis 16, namely the playback part 5 is at the nearest position from the top wall 101, and the first stopper 103 is parallel to the surfaces of the moving chassis 16 and the top wall 101.

When the playback part 5 is inserted among the holders 19, and clamps the CD 2 held by the holder 19 to play back, the first stopper 103 comes close to or contacts an outer edge of the other CD 2 at the arrow K1 side from the CD 2 to be played back. Then, the first stopper 103 supports the other CD 2 at the arrow K1 side.

Further, when loading and unloading the CD 2 through the slot 10, or when moving the playback part 5 along the arrow K for playing back the CD 2, the first stopper 103 comes close to or contacts an outer edge of the CD 2 held by the holder 19 with the up-down stopper 106. Then, the first stopper 103 supports the CD 2 which the first stopper 103 comes close to or contacts.

The second stopper 104 is made of synthetic resin, and formed in a plate shape. The second stopper 104 is interposed between the slot 10 and the holders 19. Further, the second stopper 104 faces the holder 19 holding the CD 2 across the CD 2. The second stopper 104 is attached to the bottom wall 11 of the fixed chassis 9, and extended vertically from the bottom wall 11.

When the playback part 5 is inserted among the holders 19 and clamp the CD 2 held by the holder 19 for playback, the second stopper 104 comes close to or contacts an outer edge of the other CD 2 at the arrow K2 side from the CD 2 to be played back. Then, the second stopper 104 supports the other CD 2 at the arrow K2 side.

Further, when loading and unloading the CD 2 through the slot 10, or when moving the playback part 5 along the arrow K for playing back the CD 2, the second stopper 104 comes close to or contacts an outer edge of the CD 2 held by the holder 19 with the up-down stopper 106. Then, the second stopper 104 supports the CD 2 which the second stopper 104 comes close to or contacts.

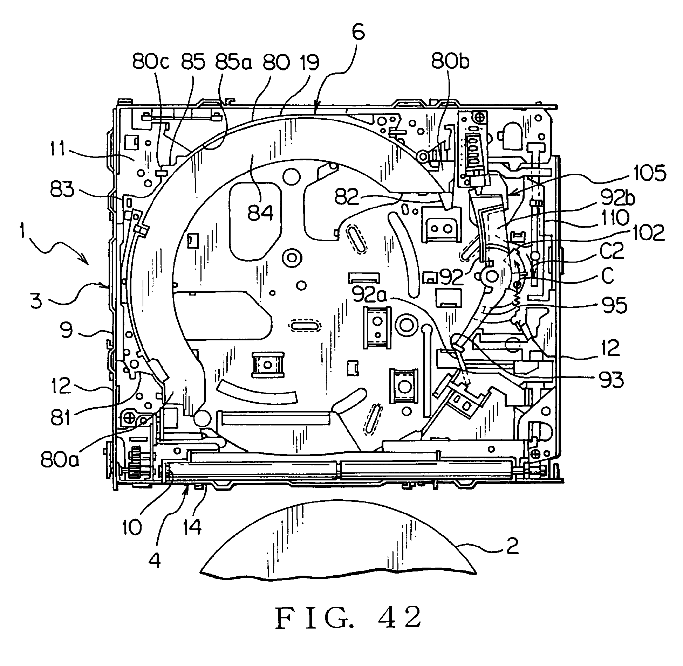

As shown in Fig. 42, the swing stopper 105 is interposed between the slot 10 and the holders 19. Further, the swing stopper 105 faces the holders 19 across the CD 2 held by the holder 19. As shown in Fig. 42, the swing stopper 105 includes a main body of the arm 92, an abutting part 93, a coil spring 95 as an urging member.

The main body of the arm 92 is formed in an arm (bar) shape, and supported by the retaining chassis 102 rotatably along an arrow C (shown in Fig. 42) about the center in a longitudinal direction thereof. Thus, the main body of the arm 92, namely the swing stopper 105 is moved along the arrow K relative to the main body of the playback apparatus 3, namely the fixed chassis 9 with the playback part 5, namely, the swinging chassis 17 and the pickup playback part.

The main body of the arm 92 is rotatable between a position (shown in Fig. 42) where in a state the swinging chassis 17 is saved from the CDs 2, namely the holders 19, an end 92a near the slot 10 can contact the outer edge of the CD 2 inserted from the slot 10, and a position where CD 2 expand for inserting the CD 2. Further, the second slide chassis 62 and the like prevents the main body of the arm 92 from rotating over the position shown in Fig. 42 and the projected position.

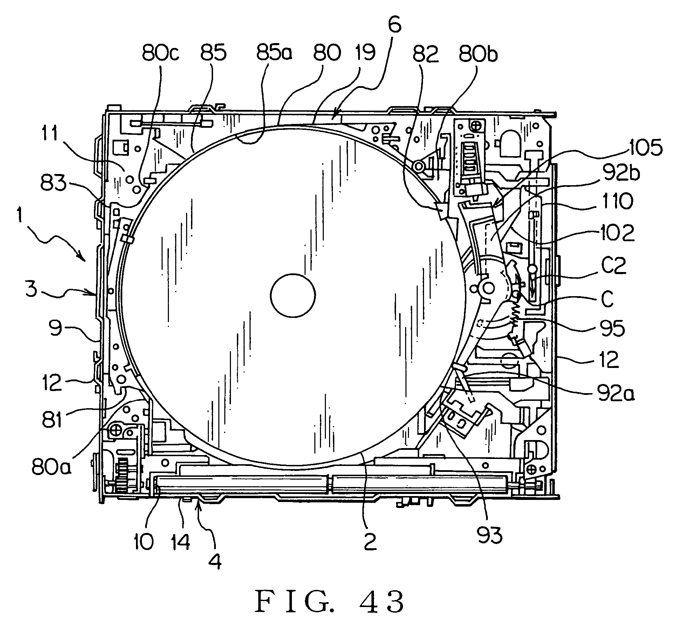

The abutting part 93 is disposed on the end 92a of the main body of the arm 92. The abutting part 93 abuts on the CD 2 inserted into the main body of the playback apparatus 3 through the slot 10. Further, when the playback part 5 is inserted among the holders 19 and clamp the CD 2 held by the holder 19 for playback, the abutting part 93 comes close to or contacts the outer edge of the CD 2 until the playback part 5 clamps the CD 2. As shown in Fig. 43, the abutting part 93, namely the swing stopper 105 supports the CD 2 until the playback part 5 clamps the CD 2. Further, when the playback part 5 clamps the CD 2, as shown in 44, the swing stopper 105 is driven by a cam of a lever attached to the load frame 110 which is moved together with the second slide chassis 62, and the abutting part 93 is rotated in a direction of removing from the outer edge of the CD 2. Thus, the swing stopper 105 supports the CD 2 until the playback part 5 clamps the CD 2, then is saved from the CD 2.

One end of the coil spring 95 is attached to the retaining chassis 102, and the other end of the coil spring 95 is attached to the main body of the arm 92. The coil spring 95 urges the main body of the arm 92 along an arrow C2 (shown in Fig. 42) in a direction where the abutting part 93 approaches the outer edge of the CDs 2 held by the holders 19.

The up-down stopper 106 is made of metal plate, and formed of a plate shape. The up-down stopper 106 is interposed between the slot 10 and the holders 19. The up-down stopper 106 faces the holder 19 across the CD 2 held by the holder 19. The up-down stopper 106 is attached to the swinging chassis 17 and works as a stopper when the swinging chassis 17 is saved from the CD 2.

When loading or unloading the CD 2 through the slot 10 or moving the playback part 5 along the arrow K for playback the CD 2, the up-down stopper 106 comes close to or contacts the outer edge of the CD 2 held by the holder 19 with the first stopper 103 or the second stopper 104. Then, the up-down stopper 106 supports the CD 2.

The auxiliary stopper 107 is made of metal plate and formed of a plate shape. The auxiliary stopper 107 is interposed between the slot 10 and the holders 19. The auxiliary stopper 107 faces the holder 19 across the CD 2 held by the holder 19. The auxiliary stopper 107 is disposed on the up-down stopper 106 at the arrow K2 side, and attached to the moving chassis 16.

When the playback part 5 is inserted among the holders 19 and clamp the CD 2 held by the holder 19 for playback, the auxiliary stopper 107 with the second stopper 104 comes close to or contacts an outer edge of the other CD 2 at the arrow K2 side from the CD 2 to be played back. Then, the auxiliary stopper 107 with the second stopper 104 supports the other CD 2 at the arrow K2 side.

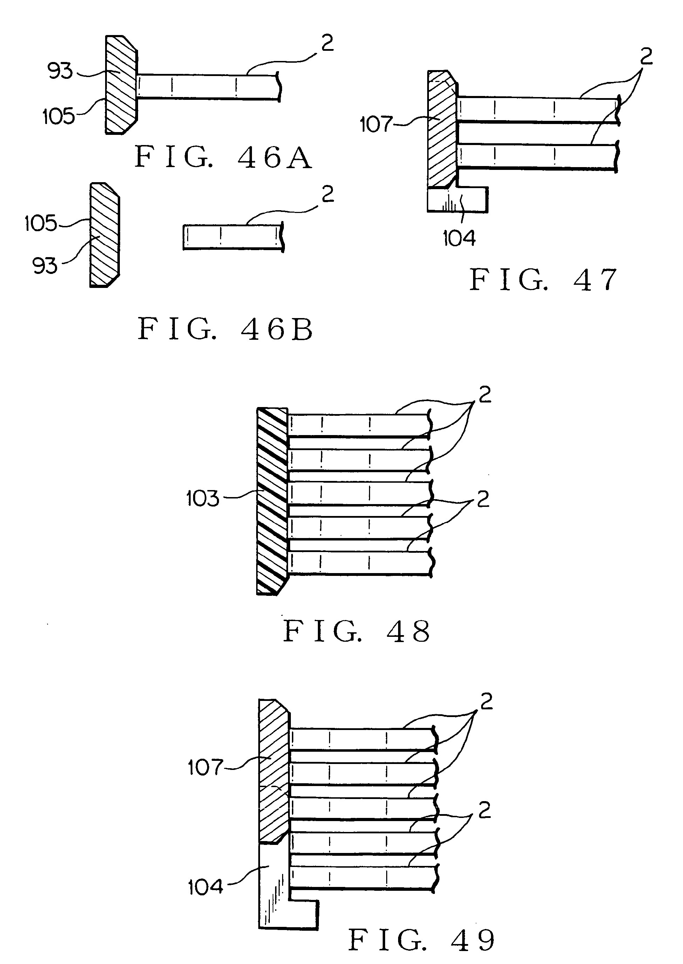

When the CD changer 1 reads the data out of the CD 2 selected from the CDs 2 received in the main body of the playback apparatus 3 by such as an operation part, the driving force of the motor 20 moves the second slide chassis 62 and the like, and the main body of the arm 92 is rotated in a direction where the abutting part 93 of the swing stopper 105 approaches the outer edge of the CD 2. Then, as shown in Figs. 43, 46A, the abutting part 93 comes close to or contacts the outer edge of the CD 2, and the swing stopper 105 supports the CD 2. Incidentally, the 46A shows the swing stopper 105 contacting the outer edge of the CD 2.

As shown in Fig. 19, all the projections 29 of the holders 19 are positioned on a horizontal part A of the second wall 27b by the driving force of the motor 20. Further, the other end of the swinging chassis 17 of the playback part 5, namely the turntable and the pickup playback part, is saved from the CD 2. As shown in Fig. 34, the driving chassis 42 is positioned on a position where the first projections 43 are positioned in the first parallel part 49 of the first holes 44 by the driving force of the motor 41. Then, as shown in Fig. 19, the moving chassis 18 is moved the farthest away from the second wall 27a of the rotating member 25.

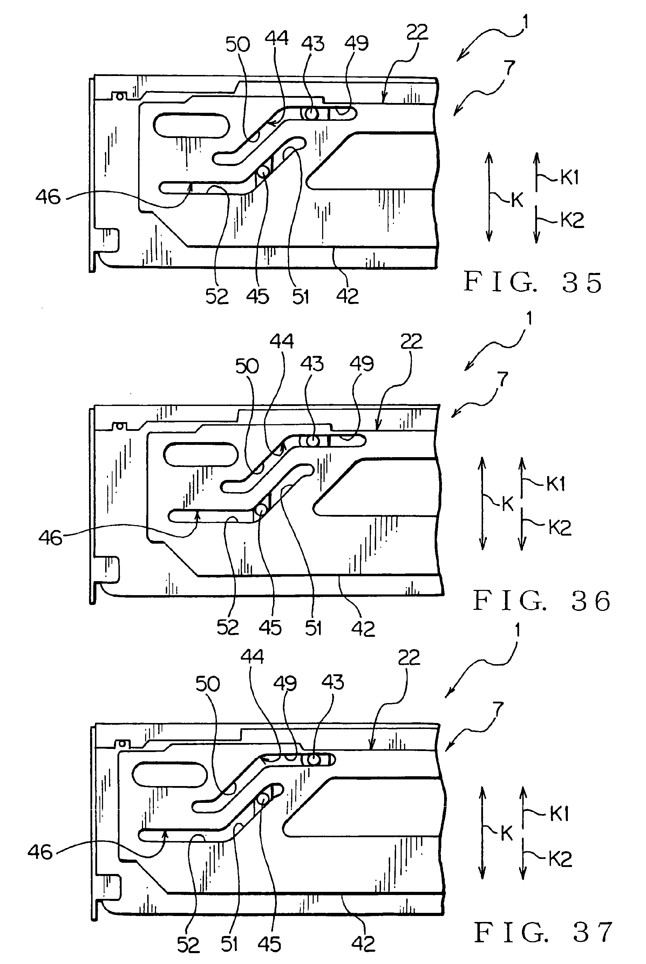

Then, owing to the driving force of the motor 41, as shown in Fig. 35, the second projection 45 is moved in the second slope part 51 so that the driving chassis 42 is positioned on a position where the projection 29 of the holder 19 having the CD 2 selected for reading out the data faces the guiding groove 31 in a direction perpendicular to the arrow K. Then, as shown in Figs. 8 and 20, the opening part 32 of the guiding groove 31 of the cam member 24 faces the projection 29 of the holder 19 holding the CD 2 selected for reading out the data in a direction perpendicular to the arrow K. Incidentally, in Figs. 8 and 20, the projection 29 of the fourth holder 19 from the top faces the guiding groove 31 formed on the cam member 24.

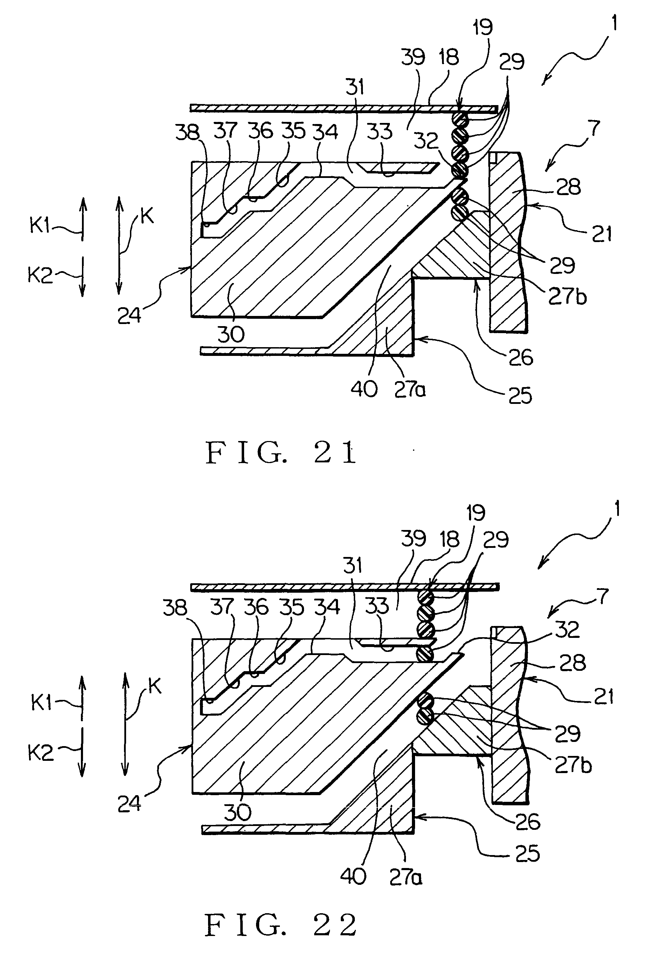

Then, owing to the driving force of the motor 20, the rotating member 25, the moving member 26, and the cam member 24 are integrally rotated. Then, the projections 29 of all the holders 19 are gradually removed from the connecting wall 28. Then, as shown in Fig. 21, the projection 29 of the holder 19 holding the CD 2 selected for reading out the data is inserted into the opening part 32 of the guiding groove 31. Further, the projections 29 of the holders 19 holding the other CDs 2 contact the wedge part 30 of the cam member 24, and moved in the first spaced groove 39 and the second spaced groove 40 owing to the wedge part 30 and the like.

Further, as shown in Fig. 22, when the rotating member 25, the moving member 26, and the cam member 24 are rotated owing to the driving force of the motor 20, the projection of the holder 19 holding the CD 2 selected for reading out the data is positioned in the loading part 33. Further, the selected CD 2, the other CDs 2 at the arrow K1 side, and the other CDs 2 at the arrow K2 side are separated from each other.

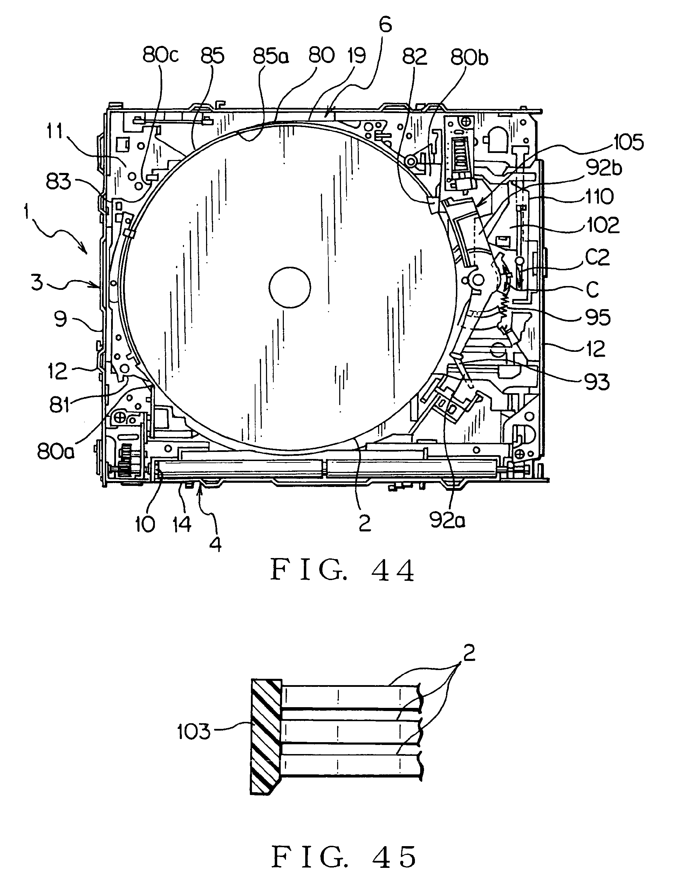

As shown in Fig. 45, the first stopper 103 comes close to or contacts the outer edges of the CDs 2 at the arrow K1 side. Then, the first stopper 103 supports the CDs 2 at the arrow K1 side. Incidentally, Fig. 45 shows the first stopper 103 contacting the outer edges of the CDs 2.

Further, as shown in Fig. 47, both the second stopper 104 and the auxiliary stopper 107 come close to or contact the outer edges of the other CDs 2 at the arrow K2 side. Then, both the second stopper 104 and the auxiliary stopper 107 support the other CDs 2 at the arrow K2 side. Incidentally, Fig. 47 shows both the second stopper 104 and the auxiliary stopper 107 contacting the outer edges of the CDs 2.

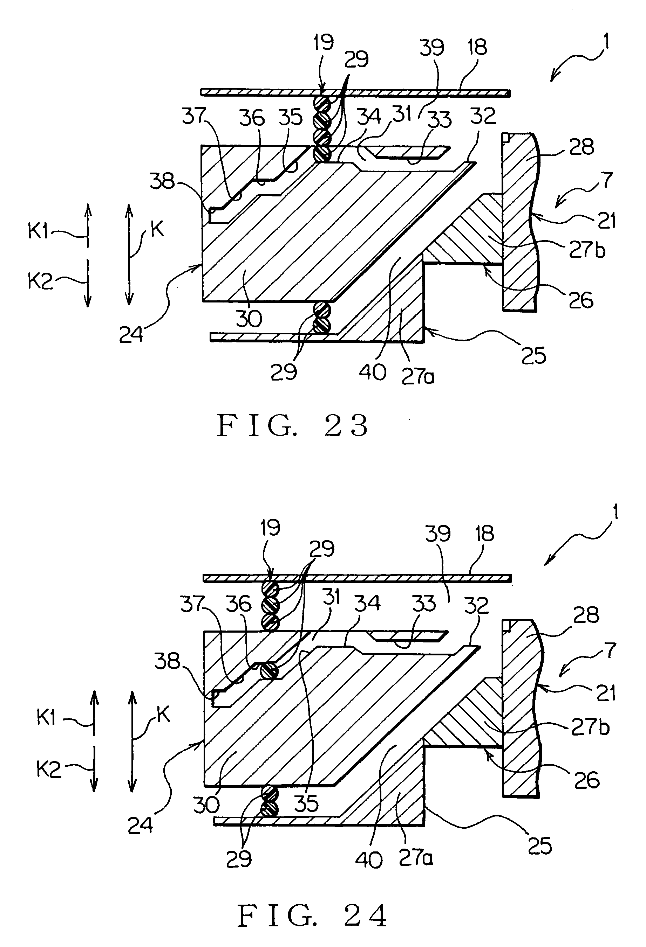

Then, as shown in Fig. 23, the projection 29 of the holder 19 holding the selected CD 2 is positioned on the pickup insertion part 34 of the guiding groove 31. At this time, the swinging chassis 17 is rotated about the one end thereof, and the other end of the swinging chassis 17, namely the turntable and the pickup playback part, is inserted between the selected CD 2 and the other CDs 2.

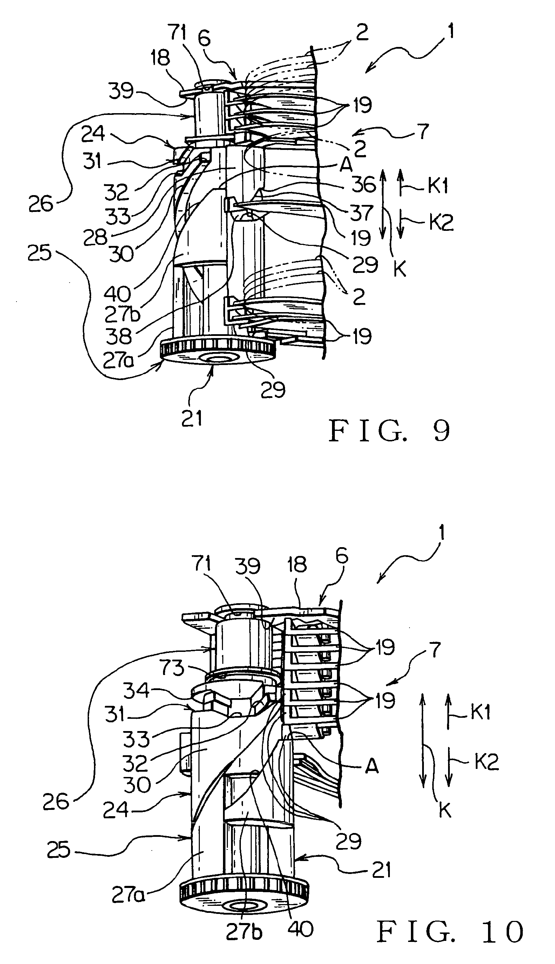

Then, the projection 29 of the holder 19 holding the selected CD 2 is passed through the first connecting part 35, and positioned in the clamp part 36. At this time, the turntable of the playback part 5 clamps the selected CD 2. Then, the second slide chassis 62 and the like are moved owing to the driving force of the motor 20, and the main body of the arm 92 is rotated in a direction where the abutting part 93 of the swing stopper 105 is removed from the outer edge of the selected CD 2. Then, as shown in Figs. 44, and 46B, the abutting part 93 is removed from the outer edge of the selected CD 2, and the swing stopper 105 is saved from the selected CD 2. Then, the projection 29 of the holder 19 holding the selected CD 2 is passed through the second connecting part 37, and as shown in Figs. 9 and 25, positioned in the playback part 38.

Further, the projections 29 of the holders 19 holding the CDs 2 at the arrow K1 side are moved to an inner part of the first spaced groove 39, namely away from the connecting wall 28 owing to the wedge part 30 of the cam member 24. Further, the projections 29 of the holders 19 holding the CDs 2 at the arrow K2 side are moved to an inner part of the second spaced groove 40, namely away from the connecting wall 28 owing to the wedge part 30 of the cam member 24.

Then, as shown in Figs. 9 and 25, the guiding groove 31 mounted on the wedge part 30 of the cam member 24 positions the holder 19 holding the selected CD 2. Further, the wedge part 30 of the cam member 24, the moving chassis 18, and the second walls 27, namely the first spaced groove 39 and the second spaced groove 40, remove the holder 19 holding the selected CD 2 from the other holders 19. Further, the first spaced groove 39 and the second spaced groove 40 positions the other holders 19.

Further, when the projection 29 of the holder 19 holding the selected CD 2 is positioned in the playback part 38, the holder 19 is moved away from the CD 2 clamped by the turntable of the playback part 5. Thus, the rotation of the CD 2 is prevented from being disturbed by the holder 19. As the turntable rotates the clamped CD 2, the optical pickup 66 of the pickup playback part reads the data from a desired position of the CD 2. Further, as described the above, while the holders 19, namely the CDs 2 are moved along the arrow K, and while the optical pickup 66 of the pickup playback part reads the data from the desired position of the CD 2, the first stopper 103 supports the CDs 2 at the arrow K1 side by contacting the outer edges thereof, and the second stopper 104 supports the CDs 2 at the arrow K2 side by contacting the outer edges thereof. When stopping the readout from the selected CD 2, the driving force of the motor 20 rotates the rotating member 25, the moving member 26, and the cam member 24 reversely.

As described the above, the separating mechanism 7 moves the cam member 24 along the arrow K, and expands or contracts the groove widths of the first spaced groove 39 and the second spaced groove 40, so that the separating mechanism 7 positions the holder 19 holding the desired CD 2, and moves the holder 19 away from the other holders 19. Thus, the separating mechanism 7 separates the holder 19 holding the selected CD 2 from the other holders 19 along the arrow K.

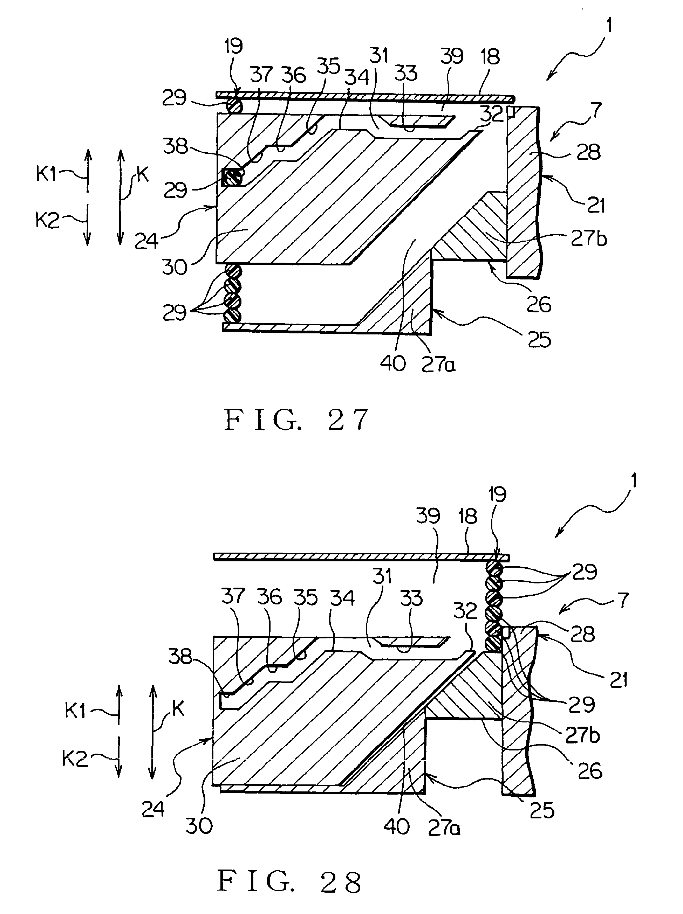

For example, as shown in Fig. 26, in a case when positioning the holder holding the second CD 2 from the bottom at the playback position, or as shown in Fig. 27, in a case that the holder holding the second CD 2 from the top at the playback position, the separating mechanism 7 separates in a similar manner. Incidentally, in cases shown in Figs. 26 and 27, the first projections 43 is positioned in the first parallel part 49 as shown in Figs. 36 and 37, and the second projection 45 is positioned in the second slope part 51.

While playing back the selected CD 2, the first stopper 103 supports the other CD 2 at the arrow K1 side, and both the second stopper 104 and the auxiliary stopper 107 support the other CD 2 at the arrow K2 side. The swing stopper 105 supports the selected CD to be played back until the selected CD 2 is clamped. When the playback part 5 clamps the CD 2, the swing stopper 105 is saved from the selected CD 2.

For example, as shown in Fig. 48, in a case to play back the CD 2 at the bottom, or as shown in Fig. 49, in a case to play back the CD 2 at the top, the stoppers works in a similar manner. Incidentally, as shown in Fig. 48, when playing back the CD 2 at the bottom, the moving chassis 16, namely the playback part 5 is removed the farthest away from the top wall 101, and the first stopper 103 supports all the other CD 2. Fig. 48 shows the first stopper 103 contacting the outer edges of all the other CD 2.

Further, as shown in Fig. 49, when playing back the CD 2 at the top, the moving chassis 16, namely the playback part 5 is moved the nearest the top wall 101, and both the second stopper 104 and the auxiliary stopper 107 support all the other CD 2. Fig. 49 shows the second stopper 104 and the auxiliary stopper 107 contacting the outer edges of all the other CD 2.

Further, the CD changer 1 ejects the selected CD 2 from the main body of the playback apparatus 3 according to instructions from such as an operating part. As shown in Figs. 7, 10, and 28, when inserting the CD 2 into the main body of the playback apparatus 3 and making the selected holder 19 hold the CD 2, the CD changer 1 positions the projections 29 of all the holders 19 at the horizontal part A of the second wall 27b by the driving force of the motor 20. Further, the other end of the swinging chassis 17 of the playback part 5, namely the turntable and the pickup playback part, is saved from the CDs 2.

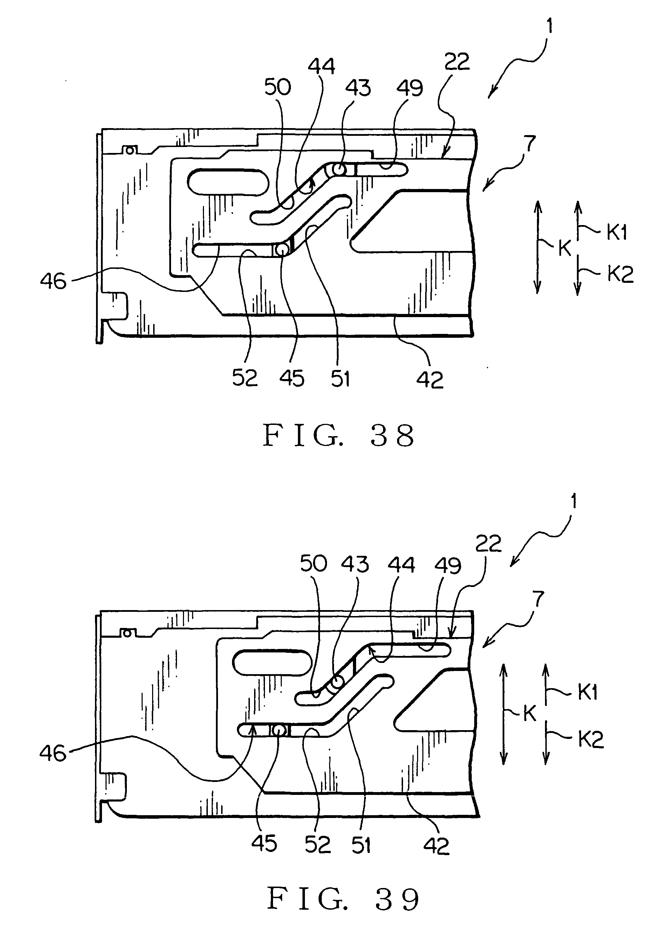

Then, as shown in Fig. 38, the driving chassis 42 is positioned in a manner that the second projection 45 is positioned in the second parallel part 52 of the second hole 46 by the driving force of the motor 41. Then, as shown in Figs. 7, 10, and 28, the cam member 24 is moved the closest to the second wall 27a of the rotating member 25.

As shown in Fig. 39, owing to the driving force of the motor 41, the first projections 43 is moved in the first slope part 50 of the first holes 44, so that the driving chassis 42 is positioned in a position where the projection 29, of the holder 19 of which CD 2 is to be ejected, faces the 32 of the guiding groove 31 along the direction perpendicular to the arrow K.

Then, as shown in Figs. 7, 10, and 29, the guiding groove 31 of the cam member 24 faces the projection 29 of the selected holder 19 in a direction perpendicular to the arrow K Incidentally, in Figs. 7, 10, and 29, the projection 29 of the fourth holder 19 from the top faces the guiding groove 31 mounted on the cam member 24.

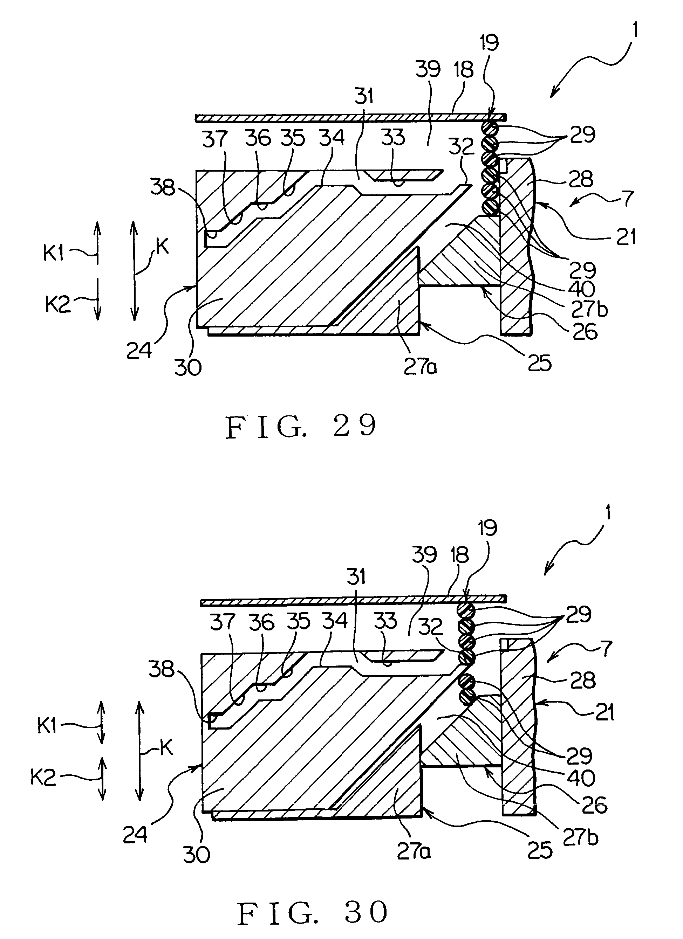

Then, the driving force of the motor 20 integrally rotates the rotating member 25, the moving member 26, and the cam member 24. Then, the projections 29 of all the holders 19 are gradually removed from the connecting wall 28. Then, as shown in Fig. 30, the projection 29 of the selected holder 19 is inserted into the opening part 32 of the guiding groove 31. Further, the projections 29 of the other holders 19 contact the wedge part 30 of the cam member 24, and owing to the wedge part 30 or the like, are moved in the first spaced groove 39 and the second spaced groove 40. Then, the selected holder 19 is gradually separated from the other holders 19.

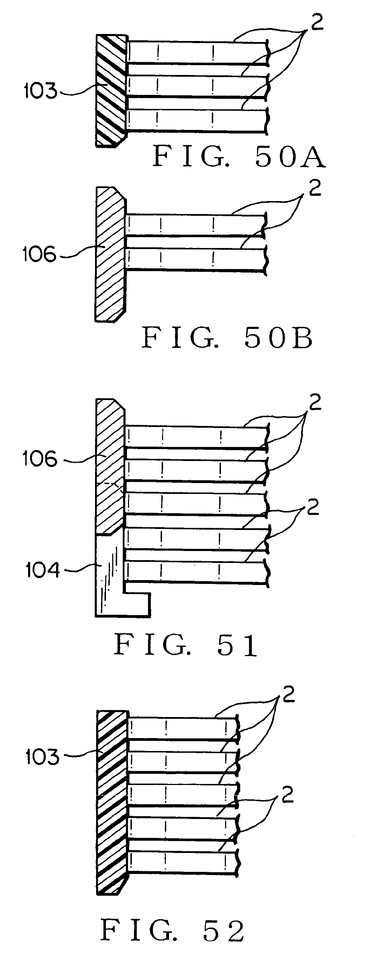

As shown in Fig. 50A, the first stopper 103 comes close to or contacts the outer edges of the other CDs 19 at the arrow K1 side. Then, the first stopper 103 supports the other CDs 2 at the arrow K1 side. Incidentally, Fig. 50A shows the first stopper 103 contacting the outer edges of the CDs 2.

As shown in Fig. 50B, the up-down stopper 106 comes close to or contacts the outer edges of the other CDs 19 at the arrow K2 side. Then, the up-down stopper 106 supports the other CDs 2 at the arrow K2 side. Incidentally, Fig. 50B shows the up-down stopper 106 contacting the outer edges of the CDs 2.

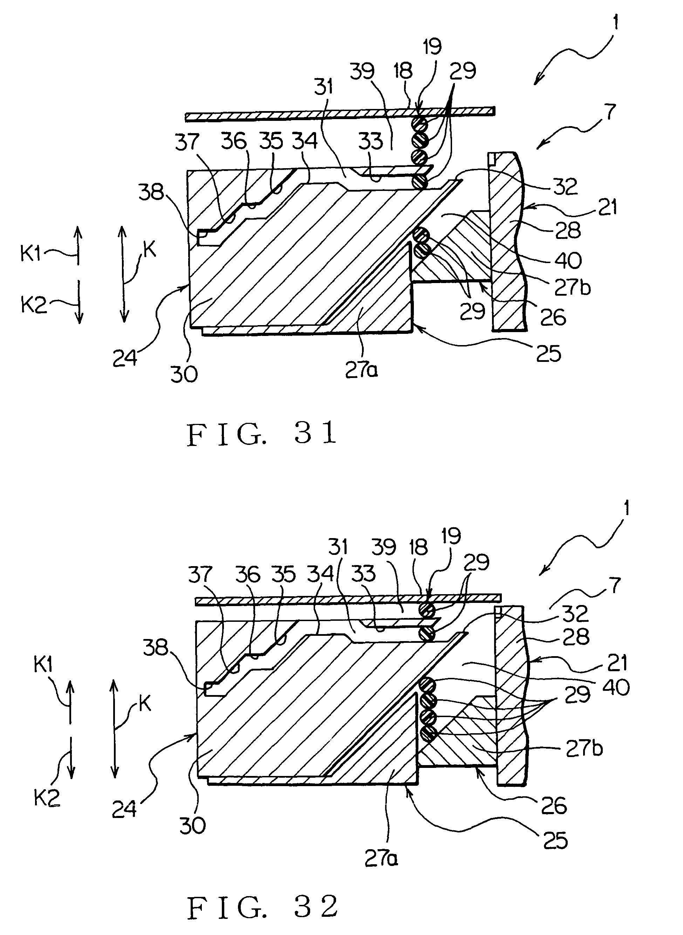

As shown in Figs. 11 and 31, when the driving force of the motor 20 integrally rotates the rotating member 25, the moving member 26, and the cam member 24, the projection 29 of the selected holder 19 is positioned in the loading part 33 of the guiding groove 31. Further, the wedge part 30 of the cam member 24 moves the projections 29 of the other holders 19 to inner parts of the first spaced groove 39 and the second spaced groove 40, namely a position away from the connecting wall 28.

Then, as shown in Figs. 11 and 31, the guiding groove 31 mounted on the wedge part 30 of the cam member 24 positions the selected holder 19 on the loading position. Further, the wedge part 30 of the cam member 24, the moving chassis 18, and the second walls 27, namely the first spaced groove 39 and the second spaced groove 40, removes the selected holder 19 from the other holders 19. Further, the first spaced groove 39 and the second spaced groove 40 positions the other holders 19. Further, as described the above, while moving the holders 19 along the arrow K for loading or unloading the CD 2, the first stopper 103, the up-down stopper 106, and the second stopper 104 support the CDs 2 held by the other holders 19.

Then, the driving force of the motor 41 rotates the roller 14 in a direction corresponding to loading or unloading of the CD 2. The CD 2 is loaded or unloaded into the main body of the playback apparatus 3 through the slot 10 by the rotation of the roller 14. At this time, a operation mode of the swing stopper 105 is changed according to a shift of the cam of the lever attached to the load frame 110, so that the swing stopper 105 is rotatable corresponding to an insertion of the CD 2. When stopping the loading and unloading of the CD 2, the rotation of the roller 14 is stopped and the driving force of the motor 20 rotates reversely the rotating member 25, the moving member 26, and the cam member 24.

As described the above, by moving the cam member 24 along the arrow K, expanding and contracting the groove widths of the wedge part 30 and the second spaced groove 40, the desired holder 19 is positioned on the loading position, and separated from the other holders 19. For example, as shown in Fig. 32, in a case when positioning the second holder 19 from the top on the loading position, or as shown in Fig. 33, in a case when positioning the second holder 19 from the bottom, the cam member 24 works in a similar way. Further, in cases shown in Figs. 32 and 33, the second projection 45 is positioned in the second parallel part 52 as shown in Figs. 40 and 41, and the first projections 43 is positioned in the first slope part 50.

Further, when loading or unloading the CD 2, the other CDs 2 are supported by the up-down stopper 106, the first stopper 103, and the second stopper 104. For example, as shown in Fig. 51, in a case when the CD 2 at the top is ejected or held by the holder 19, the stoppers works in a similar manner. Incidentally, as shown in Fig. 51, in a case when the CD 2 at the top is ejected or held by the holder 19, the second stopper 104 and the up-down stopper 106 support all the CDs 2 held by the other holders 19. Incidentally, Fig. 51 shows the second stopper 104 and the up-down stopper 106 contacting the outer edges of the CDs 2.

Further, as shown in Fig. 52, in a case when the CD 2 at the bottom is ejected or held by the holder 19, the stoppers works in a similar manner. Incidentally, as shown in Fig. 52, in a case when the CD 2 at the bottom is ejected or held by the holder 19, only the first stopper 103 supports all the CDs 2 held by the other holders 19. Incidentally, Fig. 52 shows the first stopper 103 solely contacting the outer edges of the CDs 2.

According to the present embodiment, the first stopper 103 supports the other CD 2 at the arrow K1 side, the second stopper 104 and the auxiliary stopper 107 support the other CD 2 at the arrow K2 side, and the swing stopper 105 supports the selected CD 2 for readout of the data. Therefore, when playing back the selected CD 2, CDs 2 of all the holders 19 are prevented from falling out.

Further, the up-down stopper 106 is moved with the playback part 5, and supports the CDs 2. Therefore, even when the holders 19, namely the CDs 2 are moved along the arrow K, the first stopper 103, the second stopper 104, the up-down stopper 106, and the auxiliary stopper 107 support all the CDs 2. Therefore, when loading or unloading the CD 2 or when moving the CD 2 along the arrow K, all the CD 2 are prevented from falling out of the holders 19.

Therefore, even when the holders 19 are downsized by such as forming a C-shape and CD changer 1 is downsized, All the CD 2 are surely prevented from falling out of the holders 19.

Further, mounting a plurality of stoppers prevent the stoppers 103, 104, 105, 106, 107 from disturbing the movement of the playback part 5. Because the auxiliary stopper 107 supports the other CD 2 at the arrow K2 side, the other CD 2 at the arrow K2 side particularly are prevented from falling out of the holders 19.

The projection 29 of the holders 19 holding the selected CD 2 is engaged with the guiding groove 31. The projections 29 of the holders at the arrow K1 side are engaged with the first spaced groove 39, and the projections 29 of the holders 19 at the arrow K2 side are engaged with the second spaced groove 40. Thus, the selected CD 2 is separated from the other CD 2, and the data from the selected CD is read out.

Further, the spaced groove expansion mechanism 21 varies the groove widths of the first spaced groove 39 and the second spaced groove 40 relatively. The sum of the groove widths of the first spaced groove 39 and the second spaced groove 40 is substantially equal to the product of the number of the holders 19 minus one by the width of the projection 29. Therefore, the holder 19 holding the selected CD 2 and the other holders 19 are positioned without any rattle.

Therefore, the spaced groove expansion mechanism 21 varies the groove widths of the first spaced groove 39 and the second spaced groove 40 relatively without mounting a coil spring, so that the holder 19 holding the selected CD 2 is separated from the other holders 19. Thereby, even when the CD changer 1 mounted on a vehicle is vibrated, the holders 19 is prevented from being vibrated. Therefore, the holder 19 holding the selected CD 2 is surely positioned on the playback position. Even when the vehicle is vibrated, the data on the CD 2 is surely read out.

The spaced groove expansion mechanism 21 includes the moving member 26 and the cam member 24 mounted on the moving member 26 movably along the arrow K. The first spaced groove 39 is formed between the moving chassis 18 mounted on the moving member 26 and the wedge part 30 of the cam member 24. The second spaced groove 40 is formed between the second walls 27 of the moving member 26 and the wedge part 30. The guiding groove 31 is formed on the wedge part 30 of the cam member 24.

Therefore, sliding the cam member 24 along the arrow K surely varies the groove widths of the first spaced groove 39 and the second spaced groove 40 relatively. Further, the cam member 24 slides according to the position of the holder 19 holding the selected CD 2. Therefore, the holder 19 holding the selected CD 2 is surely positioned on the playback position.

Because the cam member 24 and the optical pickup 66 are integrally moved, a relative position between the cam member 24 and the optical pickup 66 is kept constant. Therefore, the optical pickup 66 surely reads out the data from the CD 2 held by the holder 19 positioned on the playback position by the guiding groove 31 mounted on the cam member 24.

When reading out the data from the CD 2, the moving member 26 is moved toward the arrow K1 side, then the cam member 24 is slid corresponding to the position of the holder 19 holding the selected CD 2. Therefore, any CD 2 can be positioned on the playback position. Therefore, the data from any CD 2 can be read out.

Further, when loading or unloading the CD 2, the cam member 24 is moved toward the arrow K2, then the moving member 26 is slid corresponding to the positions of the cam member 24 and the holder 19 of the loaded or unloaded CD 2. Thus, a relative position between the holder 19 holding the loaded or unloaded CD 2 and the main body of the playback apparatus 3 is kept constant. Therefore, the CD 2 is surely loaded or unloaded through the slot 10, and the CD 2 inserted into the main body of the playback apparatus 3 is surely held by the holder 19.

Further, the cooperative moving mechanism 22 moves the holders 19 between the receiving position and the playback position, and positions the holder 19 at the loading position sequentially. Therefore, the number of the components and cost can be reduced. Further, two modes can be smoothly changed, one mode is moving the holders 19 between the receiving position and the playback position, and the other mode is loading or unloading the CD 2.

The cooperative moving mechanism 22 includes the driving chassis 42 having the first holes 44 and the second hole 46, the first projections 43 mounted on the moving chassis 18 of the disk receiver 6, and the second projection 45 mounted on the moving chassis 16 of the playback part 5. Each first hole 44 is composed of the first slope part 50 and the first parallel part 49, and the second hole 46 is composed of the second slope part 51 and the second parallel part 52.

When loading or unloading the CD 2, the second projection 45 is moved in the second parallel part 52, and the first projections 43 are moved in the first slope part 50. Therefore, when loading or unloading the CD 2, the moving chassis 18 of the playback part 5, namely the cam member 24 is positioned without sliding. Further, when loading or unloading the CD 2, the moving chassis 18 of the disk receiver 6 and the moving member 26, namely the holders 19 are moved along the arrow K

Therefore, a relative position between the holder 19 holding the CD 2 loaded or unloaded and the main body of the playback apparatus 3 is kept constant. Accordingly, the CD 2 is surely loaded or unloaded through the slot 10, and the CD 2 inserted into the main body of the playback apparatus 3 is surely held by the holder 19.

When moving the holder 19 between the receiving position and the playback position, the first projections 43 are moved in the first parallel part 49, and the second projection 45 is moved in the second slope part 51. Thereby, when moving the holders 19 between the receiving position and the playback position, the moving chassis 18 of the disk receiver 6 and the moving member 26, namely the holders 19 are positioned without sliding. Further, when moving the holder 19 between the receiving position and the playback position, the moving chassis 16 of the playback part 5, namely the cam member 24 is moved along the arrow K.

Therefore, any CD 2 can be positioned on the playback position. Therefore, the data from any CD 2 can be read out.

The moving member 26 and the cam member 24 are formed in a cylinder shape. The moving chassis 18 and the second walls 27 are mounted on both edges of the moving member 26. The moving member 26, the cam member 24, and the rotating member 25 are arranged coaxially, and rotated integrally by the driving force of the motor 20. Thus, a rotation of the moving member 26, the rotating member 25, and the cam member 24 moves the holders 19 between the receiving position and the playback position. Therefore, a moving path of the moving member 26, the cam member 24, and the rotating member 25 can be minimized, and the main body of the playback apparatus 3, namely the CD changer 1 can be downsized.

Further, the motor 41 solely slides the cam member 24 and the moving member 26 along the arrow K. Therefore, the number of the components can be reduced, the CD changer 1 can be downsized, and the cost of the CD changer 1 can be reduced.

In the present embodiment, the CD changer 1 receives a plurality of CD 2. However, the present invention may be adapted to such as a MD changer receiving MDs (Mini Disc) or a playback apparatus for DVDs (Digital Versatile Disc) or the like. Moreover, of course, the present invention may be adapted to a playback apparatus receiving a single MD, or a single DVD.

Further, in the present embodiment, the cam member 24, the rotating member 25, and the moving member 26 are formed in a cylinder shape, and rotated about the shaft for moving them. However, according to the present invention, the cam member 24, the rotating member 25, the moving member 26 and the like may be formed in such as a plate shape, and may be moved without rotation.

Further, in the present, the cam member 24 and the optical pickup 66 are integrally moved. However, according to the present invention, it is unnecessary that the cam member 24 and the optical pickup 66 are integrally moved. According to the present invention, it is essential to keep the relative position between the cam member 24 and the optical pickup 66 by moving them together.

Further, according to the present embodiment, owing to the cooperative moving mechanism 22, the cam member 24 and the moving member 26 are moved by a common driving force. However, according to the present invention, the cam member 24 and the moving member 26 are moved by respective driving forces.

According to the present embodiment, the CD changer 1 described below is attained.

### (supplementary note 1)

a CD changer 1 for CDs 2 comprising:
a disk receiver 6 in which a plurality of holders 19 for holding CDs 2 are overlapped;
a playback part 5 for moving along the arrow K and clamping the CD 2 held by the holder 19 to playback;
a transporting mechanism 60 for transporting the playback part 5 to a position where the playback part 5 faces a recording surface of the CD 2 received in the disk receiver 6;
   a separating mechanism 7 for separating a holder 19 for one CD 2 from the other holders 19 for holding the other CDs 2 in a direction of overlapping the holders 19;
a first stopper 103 being attached to a top wall 101 at the arrow K1 side and interposed between a slot 10 and the holders 19, said first stopper 103 holding the other CDs 2 at the arrow K1 side when the playback part 5 plays back the one CD 2;
a second stopper 104 being attached to a bottom wall 11 in the direction of overlapping the holders 19 and interposed between the slot 10 and the holders 19, said second stopper 104 holding the other CDs 2 at the arrow K2 side when the playback part 5 plays back the one CD 2;a swing stopper 105 being movable along with the playback part 5 in the direction of overlapping the holders 19, and interposed between the slot 10 and the holders 19 for holding the one CD 2 until the playback part 5 clamping the one CD 2 to playback, said swing stopper 105 being saved from the one CD 2 when the playback part 5 clamps the one CD 2; and an up-down stopper 106 being movable along with the playback part 5 in the direction of overlapping the holders 19, and interposed between the slot 10 and the holders 19 for supporting the CDs 2 held by the holding members.

### (supplementary note 2)

The CD changer 1 for CDs 2 as claimed in claim 1, further comprising:
an auxiliary stopper 107 being movable along with the playback part 5 in the direction of overlapping the holders 19, and interposed between the slot 10 and the holders 19, said auxiliary stopper 107 supporting the other CDs 2 at the second wall side from the one CD 2 with the second stopper 104.

Incidentally, the present embodiment only shows a typical embodiment of the present invention. The present invention is not limited to the present embodiment. Namely, it is possible to carry out the variations of the present invention without departing from a scope of the present invention.

## Claims

1. A playback apparatus for recording medium comprising:
a receiving chamber in which a plurality of holding members for holding recording media are overlapped;
a playback device for moving in a direction of the overlapped recording media and clamping a recording medium held by the holding member for playback;
a transporting device for transporting the playback device to a position where the playback device faces a recording surface of the recording medium received in the receiving chamber;
a separating device for separating a holding member for one recording medium from the other holding members for holding the other recording media in a direction of overlapping the holding members;
a first stopper being attached to a first wall in the direction of overlapping the holding members and interposed between a slot and the holding members, said first stopper holding first media at the first wall side from the one recording medium when the playback device playing back the one recording medium;
a second stopper being attached to a second wall in the direction of overlapping the holding members and interposed between the slot and the holding members, said second stopper holding second media at the second wall side from the one recording medium when the playback device playing back the one recording medium;
a swing stopper being movable along with the playback device in the direction of overlapping the holding members, and interposed between the slot and the holding members for holding the one medium until the playback device clamping the one medium to playback, said swing stopper being saved from the one medium when the playback device clamps the one medium; and
an up-down stopper being movable along with the playback device in the direction of overlapping the holding members, and interposed between the slot and the holding members for supporting the recording media held by the holding members.

2. The playback apparatus for recording medium as claimed in claim 1, further comprising:
an auxiliary stopper being movable along with the playback device in the direction of overlapping the holding members, and interposed between the slot and the holding members, said auxiliary stopper supporting the other medium at the second wall side from the one medium with the second stopper.
